# EUROPEAN PATENT APPLICATION

(11) **EP 4 482 248 A1**
(43) Date of publication of application: **25.12.2024**
(21) Application number: 22934261.3
(22) Date of filing: 31.03.2022
(51) Int. Cl.: H04W 76/11

(54) **COMMUNICATION SYSTEM, AND COMMUNICATION SYSTEM CONFIGURATION METHOD AND APPARATUS**

(71) Applicant: Huawei Technologies Co., Ltd., Shenzhen, Guangdong 518129 (CN)
(72) Inventor: GAO, Lei, Shenzhen, Guangdong 518129 (CN); XU, Pinghong, Shenzhen, Guangdong 518129 (CN); LIU, Hang, Shenzhen, Guangdong 518129 (CN)
(74) Representative: Gill Jennings & Every LLP
(86) International application number: PCT/CN2022/084622
(87) International publication number: WO 2023/184424

(57) **Abstract**

Embodiments of this application provide a communication system, and a communication system configuration method and apparatus, and relate to the field of communication technologies. The method includes: obtaining a wireless communication identifier of a first module; determining, based on initial topology configuration information of a communication system, at least one second module associated with the first module; and sending information about the first module to the at least one second module, where the information about the first module is used for establishing a communication connection between the first module and the at least one second module, and the information about the first module includes the wireless communication identifier of the first module. The method helps implement communication configuration of and wireless communication between modules in the communication system.

## Description

### TECHNICAL FIELD

This application relates to the field of communication technologies, and in particular, to a communication system, and a communication system configuration method and apparatus.

### BACKGROUND

Wired communication is a mainstream communication mode, and generally is wired communication between communication modules, for example, a mode of transmitting information through a tangible medium like a metal wire or an optical fiber.

However, because a cable is heavy and large in size, a cable connector is difficult to implement high reliability. Currently, a degree of automatic cable installation is low, and wireless communication has gradually become an industry trend.

To implement wireless communication between modules in a wireless communication system, each module needs to know a communication association relationship between the module and another module. However, how to perform communication configuration on the modules in the communication system to assist in implementing wireless communication is still an important urgent problem that needs to be resolved.

### SUMMARY

Embodiments of this application provide a communication system and a communication system configuration method and apparatus, to help implement communication configuration of and wireless communication between modules included in the communication system.

According to a first aspect, an embodiment of this application provides a communication system configuration method. The method may be implemented by an assembly device (or referred to as a host computer). The assembly device may be any electronic device that can implement an assembly process of a communication system, may be an automation device, an assembly line device, or the like, or may include one or more functional modules. A product form, a product structure, and the like of the assembly device are not limited in embodiments of this application. The communication system may be, for example, a wireless communication system. The wireless communication system may include at least two wireless communication modules, which are referred to as modules for short. The wireless communication system may support at least one wireless communication technology, that is, communication interaction between modules in the wireless communication system may be implemented by using the at least one wireless communication technology. Communication interaction between any module in the wireless communication system and another device (for example, the assembly device in embodiments of this application) may be implemented by using the at least one wireless communication technology or another communication technology (for example, a wired communication technology). It should be understood that, in embodiments of this application, wireless communication technologies used between the assembly device and a module in the communication system or between different modules in the communication system may be the same or different. This is not limited in embodiments of this application.

The method may include:
obtaining a wireless communication identifier of a first module;
determining, based on initial topology configuration information of the communication system, at least one second module associated with the first module; and
sending information about the first module to the at least one second module, where the information about the first module is used for establishing a communication connection between the first module and the at least one second module, and the information about the first module includes the wireless communication identifier of the first module.

According to the foregoing method, in a process of configuring the communication system, the assembly device may exchange the information about the first module between the first module and the at least one second module associated with the first module based on the initial topology configuration information of the communication system. In this way, any second module can determine the wireless communication identifier of the first module, so that the second module can establish a wireless connection to the first module based on the wireless communication identifier of the first module, and can avoid establishing an incorrect wireless connection to another module. Therefore, the first module in the communication system may establish the wireless connection to the at least one associated second module, to complete configuration for the communication system and implement wireless communication between different modules. This improves assembly automation and communication reliability of the communication system.

It should be understood that a "first module", a "second module", and the like in embodiments of this application are merely used to distinguish between different modules in the communication system, and do not limit a function, usage, or the like of each module. In another embodiment, the first module and the second module may be replaced with each other. The assembly device may send information about the second module to at least one first module associated with the second module, so that the second module can establish a wireless connection to the at least one first module. For detailed implementation details, refer to related descriptions in this embodiment of this application. Details are not described herein again.

It should be noted that, in this embodiment of this application, the first module in the communication system is used as an example. The first module may perform communication interaction with the assembly device, and the first module may perform communication interaction with another module (for example, the second module) in the system. In an optional implementation, communication interaction between the first module and the assembly device may be performed through a wireless connection, and communication interaction between the first module and the second module may be performed through a wireless connection. For ease of differentiation, a wireless communication technology used by the first module to establish a wireless connection to the assembly device may be referred to as a second wireless communication technology, a used wireless communication identifier is referred to as a second wireless communication identifier, a wireless communication technology used by the first module to establish a wireless connection to another module in the communication system is referred to as a first wireless communication technology, and a used wireless communication identifier is referred to as a first wireless communication identifier. The wireless communication identifier of the first module included in the information about the first module transmitted between the assembly device and the second module includes at least the first wireless communication identifier of the first module. Differentiation and details are not described one by one below again. It should be understood that, in embodiments of this application, the first wireless communication technology and the second wireless communication technology may be the same or different. When the first wireless communication technology is the same as the second wireless communication technology, the first wireless communication identifier and the second wireless communication identifier of the first module are the same. It should be understood that the explanation is also applicable to modules other than the first module in the communication system, and details are not described below.

It should be noted that, in this embodiment of this application, the initial topology configuration information indicates a communication topology structure between modules included in the communication system and/or a communication topology structure between locations of unknown modules to be assembled into the communication system, but does not indicate an association between at least one module included in the communication system and a specific module. For example, the initial topology configuration information may indicate that there is one module associated with the second module, but does not indicate a specific module associated with the second module. When the assembly device physically assembles the first module into the communication system, and determines, based on the initial topology configuration information and assembly information of the first module, that the first information is assembled into a location having a communication association relationship with the second module, the assembly device may determine that a module having the communication association relationship with the second module is specifically the first module. In different scenarios, the initial topology configuration information used by the assembly device may be understood differently according to a scenario requirement.

For example, in Case 1, in a manufacturing scenario of the communication system, the initial topology configuration information is specifically information about a framework of a to-be-assembled communication system. The framework is a blank framework, that is, no module is assembled. The information about the framework specifically specifies a location in which a module of a specific type/attribute needs to be assembled in the blank framework, to implement physical assembly of the communication system; and indicates specific locations in which modules that are assembled and between which there is a communication association relationship, to obtain a communication association relationship between the modules included in the communication system. For example, the initial topology configuration information indicates that a first location, a second location, and a third location, and there is a communication association relationship between a to-be-assembled module in the second location and a to-be-assembled module in the third location. In a manufacturing assembly process, after assembling a specific module of a corresponding type/attribute in a corresponding location based on the information about the framework, the assembly device determines a specific module specifically assembled in each location in the communication system. For example, a module A is assembled in the first location, a module B is assembled in the second location, and a module C is assembled in the third location.

Further, the assembly device may determine, based on the information about the framework of the communication system and assembly information that is of each module and that is obtained in the assembly process, the communication association relationship between the modules included in the communication system, for example, a communication association relationship between the module B assembled in the second location and the module C assembled in the third location.

In an assembly process or after assembly is completed, the assembly device may separately obtain, according to the configuration method in this embodiment of this application, wireless communication identifiers of the modules included in the communication system, and send the information about the first module to the at least one second module associated with the first module. The information about the first module includes at least a wireless communication identifier of a module (not limited to the first module) with which the second module needs to establish a communication association relationship. For example, the assembly device may send the information about the first module to the second module, where the information about the first module indicates the first wireless communication identifier of the first module that needs to establish the communication association relationship with the second module. The second module may establish the wireless connection to the first module based on the first wireless communication identifier.

For example, a process of establishing the wireless connection between the second module and the first module may include: The first module may send a first message including the first wireless communication identifier of the first module, and the second module feeds back a response message after detecting the first message including the first wireless communication identifier of the first module, to establish the wireless connection to the first module. Alternatively, for example, a process of establishing the wireless connection between the second module and the first module may include: The second module may send a second message including the first wireless communication identifier of the first module, and the first module sends a response message to the second module after detecting the second message including the first wireless communication identifier of the first module, to establish the wireless connection to the second module. For example, the first message/second message may be a connection request message or a broadcast message.

It should be understood that, in this embodiment of this application, information about the module is read in the assembly process because after the assembly is completed, some information on the module may be difficult to obtain due to blocking, shielding, or the like. In this way, the information is read in the assembly process to minimize impact caused by these factors. The information about the module is read after the assembly is completed because information about a plurality of modules may be obtained simultaneously after the assembly is completed if a case in which the information is difficult to be read after the assembly is completed does not exist. In this way, efficiency is higher.

For another example, in Case 2, in a maintenance assembly scenario of the communication system, a new module needs to be used to replace a faulty module or a to-be-replaced module in the communication system. The initial topology configuration information indicates at least a communication association relationship between an assembly location corresponding to the faulty module or the to-be-replaced module included in the communication system and another module included in the communication system, but does not indicate that the new module used to replace the faulty module is a specific module. During maintenance, the assembly device may use the new module to replace the faulty module or the to-be-replaced module, and update topology information of the communication system based on information about the new module.

The first module indicates the new module, and a third module indicates the faulty module or the to-be-replaced module. When no fault occurs, there is a communication association relationship between the at least one second module and the third module, and the initial topology configuration information may indicate the communication association relationship between the at least one second module and the third module. If the third module is faulty or is to be replaced, the third module needs to be replaced with the first module for maintaining the communication system. The initial topology configuration information may include the communication association relationship between the third module and the at least one second module, but does not include information that the third module is replaced with the first module.

Solution 1: In a replacement process or after replacement is completed, the assembly device may obtain the wireless communication identifier of the first module and know that the first module replaces the third module. Further, the assembly device may send the information about the first module to the at least one second module based on the initial topology configuration information, where the information about the first module may include at least the first wireless communication identifier of the first module. The at least one second module may establish the wireless connection to the first module based on the first wireless communication identifier. The connection establishment process is similar to that in the manufacturing scenario, and details are not described herein again.

Solution 2: The assembly device may obtain a first wireless communication identifier of the at least one second module. In a replacement process or after replacement is completed, the assembly device may know that the first module replaces the third module, and therefore send information about the at least one second module to the first module based on the initial topology configuration information, where the information about each second module includes at least the first wireless communication identifier of the second module. The at least one second module may establish the wireless connection to the first module based on the first wireless communication identifier. The connection establishment process is similar to that in the manufacturing scenario, and details are not described herein again.

For another example, in Case 3, in a disassembly and reassembly scenario of the communication system, the initial topology configuration information is specifically information about a framework of a reassembled communication system. The information about the framework specifically specifies a specific location in which a module of a specific type/attribute needs to be assembled into the reassembled communication system, and specific locations in which modules that are assembled and between which a communication association relationship needs to be established. Some or all modules in the reassembled communication system may be old modules obtained by disassembling from another communication system. A process in which the assembly device obtains first wireless communication identifiers of the old modules may occur in a disassembly process, after disassembly is completed, in a reassembly process, or after reassembly is completed. Other steps of a method for establishing the communication association relationship between the modules in the reassembled communication system with assistance of the assembly device are similar to those in the foregoing manufacturing assembly scenario or maintenance assembly scenario. If the reassembled communication system is completely reassembled by modules disassembled from the another communication system, refer to related descriptions in Case 1. If the reassembled communication system is reassembled by a remaining module in the communication system that is not completely disassembled and a module disassembled from another communication system, refer to related descriptions in Case 2. Details are not described herein again.

It should be noted that, in this embodiment of this application, the first wireless communication identifier is an identity of a module different from another module in a process of performing wireless communication between the modules included in the communication system. The module knows a first wireless communication identifier of the module, or the module may receive a first wireless communication identifier of an association module from the assembly device, or the module may send a first wireless communication identifier of the module to the assembly device. A manner of notifying first wireless communication identifiers of the modules included in the communication system is not limited in embodiments of this application.

With reference to the first aspect, in a possible implementation, the wireless communication identifier of the module may be located on the module. The obtaining a wireless communication identifier of a first module may include: obtaining the wireless communication identifier of the first module by using an information reading technology, where the information reading technology includes any one of the following: an image capture technology, an optical scanning technology, a radio frequency reading technology, or a magnetic label reading technology.

That is, a module to be configured in the communication system may directly carry a wireless communication identifier of the module. For example, the wireless communication identifier may be presented as an identification code, including but not limited to a barcode, QR code, a letter, a digit, or a symbol, or a combination of a plurality of types of identification codes. A carrying manner may be printing, steel printing, engraving, etching, embedding, or packaging on a surface of the module; printing, steel printing, engraving, etching, embedding, or packaging on a label or another attached object that is pasted on, attached to, or bound to a surface of the module; printing, steel printing, engraving, etching, embedding, packaging, or pasting on an outer package of the module; or the like. This is not limited in this application. The assembly device may directly read the wireless communication identifier of the module by using the information reading technology corresponding to the identification code. For example, the assembly device may include a reading module or be connected to a reading module. The reading module is a barcode scanner, a QR code scanner, a camera and a related image recognition apparatus, a radio frequency reader, a magnetic label reader, or the like that adapts to the identification code. This is not limited in embodiments of this application.

It should be understood that the wireless communication identifier directly carried by the module may include at least the first wireless communication identifier of the module. Therefore, the assembly device may not perform communication interaction with the module, but only needs to notify the first wireless communication identifier of the module to an association module of the module in the communication system after completing manufacturing assembly, maintenance, or disassembly and reassembly of the communication system to which the module belongs, to implement wireless communication of the communication system. In an optional implementation, the wireless communication identifier directly carried by the module may include a second wireless communication identifier of the module. The assembly device may establish a wireless connection to the module based on the second wireless communication identifier, perform communication interaction through the wireless connection, and transmit other information. For example, the assembly device receives information such as a model, a number, and a type of the module from the module.

With reference to the first aspect, in a possible implementation, communication interaction between the assembly device and the first module may be implemented by using a wired communication technology. The obtaining a wireless communication identifier of a first module may include: receiving the wireless communication identifier from the first module through a wired connection to the first module.

With reference to the first aspect, in a possible implementation, communication interaction between the assembly device and the first module may be implemented by using a wireless communication technology. The obtaining a wireless communication identifier of a first module may include: receiving the wireless communication identifier from the first module through a wireless connection to the first module. For example, the module may carry first indication information. The assembly device may obtain the first indication information by using an information reading technology, where the first indication information indicates the first module, and the information reading technology includes any one of the following: an image capture technology, an optical scanning technology, a radio frequency reading technology, or a magnetic label reading technology; and establish the wireless connection to the first module based on the first indication information.

In other words, the to-be-configured module in the communication system may carry indication information indicating the module. After obtaining the indication information of the module, the assembly device may establish the wireless connection to the module based on the indication information, and perform communication interaction with the module through the wireless connection. The wireless connection between the assembly device and the first module may be established by using steps similar to those in the foregoing method for establishing the connection between the first module and the second module. For example, that the assembly device establishes the wireless connection to the first module based on the first indication information may include: sending a first message to the first module, where the first message includes the first indication information, and the first message is used to request to establish the wireless connection; or receiving a second message from the first module, where the second message includes the first indication information, and the second message is used to request to establish the wireless connection.

It should be understood that, in this embodiment of this application, the indication information indicating the module may also be implemented as the identification code carried by the module. A presentation manner and a carrying manner of the identification code are similar to the foregoing manner in which the module carries the wireless communication identifier of the module. For a similarity, refer to each other. Details are not described herein again. For a manner of establishing the wireless connection between the assembly device and the first module, refer to the foregoing related descriptions with reference to the process of establishing the connection between the first module and the second module. Details are not described herein again. In an optional implementation, the first indication information located on the first module may be the same as or have a same meaning as the second wireless communication identifier of the first module.

It should be noted that, in the foregoing embodiments of this application, an example in which the first wireless communication identifier of the module is indirectly obtained only based on a case that the identification code located on the module is specifically the wireless communication identifier of the module or the indication information indicating the module is used to describe a manner of obtaining the first wireless communication identifier of the first module rather than any limitation. In another embodiment, the assembly device may alternatively obtain the first wireless communication identifier of the first module in another manner. Details are not described herein again. Similarly, the assembly device may perform communication interaction with another module in the communication system according to a method similar to the foregoing method. Details are not described herein again.

In this embodiment of this application, the assembly device and the second module may also perform a communication connection in a wired manner or a wireless manner, and exchange the information about the first module. In a possible implementation, when the wired manner is used, the sending information about the first module to the at least one second module may include: sending the information about the first module to the at least one second module through a wired connection to the at least one second module. In another possible implementation, when the wireless manner is used, the sending information about the first module to the at least one second module may include: sending the information about the first module to the at least one second module through the wireless connection to the at least one second module.

A manner of communication interaction between the assembly device and the second module is similar to a manner of communication interaction between the assembly device and the first module. In an example, a second wireless communication identifier of the second module may be implemented as an identification code located on the second module. The assembly device may obtain the second wireless communication identifier of the first module by using the information reading technology, and establish the wireless connection to the second module based on the second wireless communication identifier. In another example, an identification code located on the second module may be second indication information, and the assembly device may obtain the second indication information by using an information reading technology, where the second indication information indicates the second module, and the information reading technology includes any one of the following: an image capture technology, an optical scanning technology, a radio frequency reading technology, or a magnetic label reading technology; and establish the wireless connection to the second module based on the second indication information. For detailed implementation, refer to the foregoing related descriptions with reference to the first module. Details are not described herein again. In an optional implementation, the second indication information may be the same as or have a same meaning as the second wireless communication identifier of the second module.

In addition, the assembly device may further obtain a first wireless communication identifier of the second module in a similar manner. The first wireless communication identifier may be used for establishing a wireless connection between the second module and another module in the communication system.

For example, in Example 1, the second module may directly carry the first wireless communication identifier of the second module, and that the assembly device obtains the wireless communication identifier of the second module may include: obtaining the first wireless communication identifier of the second module by using an information reading technology, where the information reading technology includes any one of the following: an image capture technology, an optical scanning technology, a radio frequency reading technology, or a magnetic label reading technology. For example, the first wireless communication identifier may be presented as an identification code, including but not limited to a barcode, QR code, a printed letter, a digit, a symbol, or the like. The assembly device may directly read the first wireless communication identifier of the second module by using the information reading technology corresponding to the identification code. For example, the assembly device may include a reading module or be connected to a reading module. The reading module is a barcode scanner, a QR code scanner, a radio frequency reader, a magnetic label reader, or the like that adapts to the identification code. This is not limited in embodiments of this application.

In Example 2, that the assembly device obtains the first wireless communication identifier of the second module may include: receiving the first wireless communication identifier of the second module from the second module through a wired connection to the second module.

In Example 3, the second module may carry second indication information indicating the second module, and that the assembly device obtains the first wireless communication identifier of the second module may include: obtaining the second indication information by using an information reading technology, establishing a wireless connection to the second module based on the second indication information, and receiving the first wireless communication identifier from the second module through the wireless connection. The information reading technology may include any one of the following: an image capture technology, an optical scanning technology, a radio frequency reading technology, or a magnetic label reading technology.

It should be noted that, in the foregoing embodiments of this application, similarly to the first module, an example in which the wireless communication identifier of the second module is indirectly obtained only based on a case that the identification code located on the second module is specifically the wireless communication identifier of the second module or the second indication information indicating the second module is used to describe a manner of obtaining the wireless communication identifier of the second module rather than any limitation. In another embodiment, the assembly device may alternatively obtain the wireless communication identifier of the second module in another manner. For related descriptions, refer to the foregoing related descriptions with reference to the first module. Details are not described herein again. In an optional implementation, the second indication information may be the same as or have a same meaning as the second wireless communication identifier of the second module.

With reference to the first aspect, in a possible implementation, the information about the first module may further include other information, for example, including but not limited to at least one of the following: a model of the first module, a number of the first module, a type of the first module, or an assembly location of the first module in the communication system. After receiving the information about the first module, any second module may implement functions such as identification, communication, positioning, and management for another module based on the information, to provide functions such as providing a specific service (for example, the service may include but is not limited to: reporting specific measurement data or triggering enabling/disabling of a heating or cooling function) for a specific module; and implement functions such as storing a correspondence between some or all modules in the communication system and assembly locations thereof (for example, the stored information may be used by the second module to provide corresponding information for the assembly device in the maintenance scenario).

In the foregoing manner, the assembly device may flexibly determine whether to notify the at least one second module of the model, the number, or the type of the first module, the assembly location of the first module in the communication system, or the like, so that the at least one second module can know basic module information of the first module, and communication overheads between the first module and the at least one second module are reduced. It should be understood that, in some cases, in an optional implementation, the second module may further reversely notify the assembly device of the stored information such as the model, the number, or the type of the first module, or the assembly location of the first module in the communication system. For example, when the first module in the communication system is faulty, and the second module determines that the first module is faulty, the second module may report the information such as a model and a type of the first module or the assembly location of the first module in the communication system to the assembly device, so that the assembly device replaces the faulty module, to implement fault maintenance of the communication system and ensure reliability of the communication system.

With reference to the first aspect, in a possible implementation, the initial topology configuration information indicates a communication topology structure between modules included in the communication system and/or a communication topology structure between locations of unknown modules to be assembled into the communication system, and the method may further include: determining topology information based on the initial topology configuration information and assembly information of at least one module in a process of assembling the communication system, where the assembly information of the module includes at least one of the following: a sequence in which the module is identified by the assembly device, a location in which the module is identified by the assembly device, and an assembly location or an assembly sequence in which the module is assembled into the communication system. The topology information indicates a communication association relationship between the modules included in the communication system. The information about the first module that is sent by the assembly device to the at least one second module may further include partial or all content of the topology information.

According to the foregoing method, the assembly device may accurately determine the topology information in different scenarios based on the initial topology configuration information of the communication system and actual assembly information of different modules. For example, in an assembly line configuration factory, the assembly device physically assembles the communication system based on the initial topology configuration information. The initial topology configuration information indicates a plurality of locations in which modules need to be assembled and a communication association relationship between to-be-deployed modules in the locations. For example, the initial topology configuration information indicates a first location, a second location, and a third location, and wireless communication needs to be established between a to-be-deployed module in the second location and a to-be-deployed module in the third location. When the assembly device sequentially assembles different modules based on the initial topology configuration information, for example, sequentially deploys an identified module A in the first location, deploys an identified module B in the second location, and deploys an identified module C in the third location, the assembly device needs to comprehensively determine the topology information based on factors such as a sequence or a location in which the module A/B/C is actually identified (the identification process depends on a submodule in the assembly device, and details are described below), an assembly location or an assembly sequence in which the module A/B/C is assembled into the communication system, and modules actually assembled in the locations.

With reference to the first aspect, in a possible implementation, the first module is configured to replace the third module in the communication system, the third module is the faulty module or the to-be-replaced module, and the method may further include:
updating the topology information based on the initial topology configuration information of the communication system, the information about the first module, and information about the third module.

According to the foregoing method, for example, in the maintenance scenario or another scenario, when the first module needs to replace the third module in the communication system, the assembly device may update the topology information based on the information about the new module and the information about the replaced old module. Further, the assembly device may send updated topology information to the at least one second module, so that the at least one second module may establish a communication connection to the new module.

With reference to the first aspect, in a possible implementation, the method may further include:
determining, in any one of the following manners, the third module that is faulty or needs to be replaced:
determining the third module when detecting the modules included in the communication system; or
receiving third indication information from a fourth module, where the third indication information indicates the third module, and the fourth module includes a non-faulty module in the communication system.

According to the foregoing method, in the maintenance scenario or another scenario, the modules in the communication system are detected in at least two manners, so that a manner of detecting the faulty module or the to-be-replaced module in the communication system can be flexibly provided. In this way, the assembly device automatically detects and maintains the communication system, and the assembly device automatically updates the communication association relationship between the modules included in the communication system. This helps the communication system implement a corresponding service after maintenance is completed and the communication system is restored to operate.

It should be understood that, when the assembly device detects the modules included in the communication system, fault information or to-be-replaced information that is detected by the assembly device and that is input or configured by an operator may be further included. The fault information or the to-be-replaced information may indicate the third module. A manner of determining the third module is not limited in embodiments of this application. It may be understood that, in this embodiment of this application, the fourth module may include a module that is in the communication system and that has a communication association relationship with the third module; or may include a module that does not have a communication association relationship with the third module, for example, a module that is configured to implement a same service but does not directly communicate with the third module, or a module that has an indirect communication association relationship with the third module through an intermediate module. The intermediate module includes a module that has a direct communication association relationship of two or more levels. This is not limited in embodiments of this application.

With reference to the first aspect, in a possible implementation, the method may further include:
receiving the information about the third module from the fourth module.

According to the foregoing method, the fourth module may further send the information about the third module to the assembly device. Therefore, in the maintenance scenario or another scenario, the assembly device may further directly obtain the information about the faulty or to-be-replaced third module from the communication system, so that the assembly device performs subsequent maintenance based on the information about the third module. For example, the assembly device notifies a new module in the communication system of the information about the third module, for example, a first module replacing the third module.

With reference to the first aspect, in a possible implementation, the communication system may include a battery management system (battery management system, BMS).

According to the foregoing method, the assembly device may configure the battery management system according to the configuration method in embodiments of this application, including but not limited to configuration in scenarios such as manufacturing, maintaining, or disassembling and reassembling the battery management system. The module in the communication system may be a battery cell or a battery module. It may be understood that the communication system in embodiments of this application may further include another communication system, for example, a smart home system or a smart factory. This is not limited in embodiments of this application.

It should be noted that, in this embodiment of this application, the identification code located on the first module (or another module in the system) may be an encrypted ciphertext, and information indicated by the identification code obtained by the assembly device by using the information reading technology may also be an encrypted ciphertext. The assembly device may decrypt the encrypted ciphertext to obtain a corresponding plaintext, and then perform communication interaction with the first module or the second module based on the plaintext.

For example, the identification code indicates the wireless communication identifier of the first module. With reference to the first aspect, in a possible implementation, the wireless communication identifier of the first module may be an encrypted ciphertext, and the obtaining a wireless communication identifier of a first module may further include:
obtaining a plaintext by decrypting the wireless communication identifier of the first module in any one of the following manners:
decrypting the wireless communication identifier of the first module by using a locally stored key, to obtain the plaintext;
receiving a key from a server, and decrypting the wireless communication identifier of the first module based on the key, to obtain the plaintext; or
sending the wireless communication identifier of the first module to a server, and receiving, from the server, the plaintext obtained by decrypting the wireless communication identifier of the first module.

Similarly, when the identification code indicates first indication information, the first indication information may also be the encrypted ciphertext, and the wireless communication identifier of the first module in any one of the foregoing decryption processing manners may be replaced with the first indication information. In this way, the assembly device may also decrypt the first indication information in any one of the foregoing decryption processing manners, to obtain the corresponding plaintext.

According to the foregoing method, the wireless communication identifier or the indication information indicated by the identification code located on the module may be implemented as the encrypted ciphertext, and after reading and obtaining the wireless communication identifier of the module or the indication information, the assembly device may decrypt the encrypted ciphertext in any one of the foregoing decryption manners, to obtain the corresponding plaintext. The assembly device can perform subsequent configuration based on the obtained plaintext, to improve information security. It should be understood that, for the second module, a same manner may be used to configure an encryption-protected identification code and decrypt the identification code to obtain the corresponding plaintext. For a similarity, refer to each other. Details are not described herein again.

According to a second aspect, an embodiment of this application provides a communication system configuration method. The method may be applied to any second module, and there is a communication association relationship between the second module and the first module. The method may include: A second module receives information about a first module from an assembly device, where the information about the first module includes a wireless communication identifier of the first module; and the second module establishes a communication connection to the first module based on the information about the first module. The communication connection between the second module and the first module is, for example, a wireless connection.

With reference to the second aspect, in a possible implementation, the receiving information about a first module from an assembly device may include: receiving the information about the first module from the assembly device through a wired connection to the assembly device. With reference to the second aspect, in another possible implementation, the receiving information about a first module from an assembly device may include: receiving the information about the first module from the assembly device through a wireless connection to the assembly device.

According to the foregoing method, communication interaction between the assembly device and the second module may be performed in a wired manner or a wireless manner, and the second module may receive the information about the first module from the assembly device through a communication connection to the assembly device. The second module may establish the wireless connection to the first module based on the information about the first module, to implement wireless communication of a communication system, and improve assembly automation and communication reliability of the communication system.

With reference to the second aspect, in a possible implementation, the method may further include:
establishing the wireless connection to the assembly device in response to a first message from the assembly device, where the first message includes a wireless communication identifier of the second module, and the wireless communication identifier is used for establishing the wireless connection to the assembly device.

With reference to the second aspect, in a possible implementation, the method may further include:
establishing the wireless connection to the assembly device in response to a first message from the assembly device, where the first message includes second indication information, and the second indication information indicates the second module; or
sending a second message to the assembly device, where the second message includes second indication information, and the second message is used to request to establish the wireless connection.

According to the foregoing method, the second module may establish the wireless connection to the assembly device based on the first message or the second message exchanged with the assembly device, to perform communication interaction with the assembly device through the wireless connection. For example, the first message may be a connection request message, and the second message may be a broadcast message. For detailed implementation details, refer to the foregoing related descriptions with reference to the first aspect. Details are not described herein again.

It should be noted that, in the foregoing embodiments of this application, an example in which the wireless communication identifier of the module is indirectly obtained only based on a case that an identification code located on the module is specifically the wireless communication identifier of the module or indication information indicating the module is used to describe a manner of obtaining the wireless communication identifier of the second module rather than any limitation. In another embodiment, the assembly device may alternatively obtain the wireless communication identifier of the second module in another manner. Details are not described herein again.

With reference to the second aspect, in a possible implementation, the information about the first module may further include at least one of the following: a model of the first module, a number of the first module, a type of the first module, or an assembly location of the first module in the communication system.

With reference to the second aspect, in a possible implementation, the information about the first module further includes partial or all content of topology information, the topology information indicates a communication association relationship between modules included in the communication system, the topology information is obtained based on initial topology configuration information of the communication system and assembly information of at least one module in a process of assembling the communication system, the initial topology configuration information indicates a communication topology structure between the modules included in the communication system and/or a communication topology structure between locations of unknown modules to be assembled into the communication system, and the assembly information of the module includes at least one of the following: a sequence in which the module is identified by the assembly device, a location in which the module is identified by the assembly device, and an assembly location or an assembly sequence in which the module is assembled into the communication system.

With reference to the second aspect, in a possible implementation, the first module is configured to replace a third module in the communication system, the third module is a faulty module or a to-be-replaced module, and the topology information is updated based on the initial topology configuration information of the communication system, the information about the first module, and information about the third module.

With reference to the second aspect, in a possible implementation, the second module is a non-faulty module, and the method further includes:
sending third indication information to the assembly device, where the third indication information indicates the third module.

With reference to the second aspect, in a possible implementation, the method may further include:
sending the information about the third module to the assembly device.

With reference to the second aspect, in a possible implementation, the communication system may include a battery management system BMS.

With reference to the second aspect, in a possible implementation, at least one of the wireless communication identifier of the first module, the wireless communication identifier of the second module, first indication information, or the second indication information may be an encrypted ciphertext.

According to a third aspect, an embodiment of this application provides a communication system configuration apparatus, used in a first module. The apparatus may include:
an obtaining unit, configured to obtain a wireless communication identifier of a first module;
a determining unit, configured to determine, based on initial topology configuration information of a communication system, at least one second module associated with the first module; and
a communication unit, configured to send information about the first module to the at least one second module, where the information about the first module is used for establishing a communication connection between the first module and the at least one second module, and the information about the first module includes the wireless communication identifier of the first module.

With reference to the third aspect, in a possible implementation, the obtaining unit is configured to obtain the wireless communication identifier of the first module by using an information reading technology, where the information reading technology includes any one of the following: an image capture technology, an optical scanning technology, a radio frequency reading technology, or a magnetic label reading technology.

With reference to the third aspect, in a possible implementation, the obtaining unit is configured to: the obtaining a wireless communication identifier of a first module, including: receiving the wireless communication identifier from the first module through a wired connection to the first module.

With reference to the third aspect, in a possible implementation, the obtaining unit is configured to receive the wireless communication identifier from the first module through a wireless connection to the first module.

With reference to the third aspect, in a possible implementation, the obtaining unit is configured to obtain first indication information by using an information reading technology, where the first indication information indicates the first module, and the information reading technology includes any one of the following: an image capture technology, an optical scanning technology, a radio frequency reading technology, or a magnetic label reading technology. The communication unit is configured to establish the wireless connection to the first module based on the first indication information.

With reference to the third aspect, in a possible implementation, the communication unit is configured to:
send a first message to the first module, where the first message includes the first indication information, and the first message is used to request to establish the wireless connection; or
receive a second message from the first module, where the second message includes the first indication information, and the second message is used to request to establish the wireless connection.

With reference to the third aspect, in a possible implementation, the communication unit is configured to send the information about the first module to the at least one second module through a wired connection to the at least one second module.

With reference to the third aspect, in a possible implementation, the communication unit is configured to send the information about the first module to the at least one second module through a wireless connection to the at least one second module.

With reference to the third aspect, in a possible implementation, the obtaining unit is configured to obtain second indication information of the at least one second module by using an information reading technology, where second indication information of each second module indicates the second module, and the information reading technology includes any one of the following: an image capture technology, an optical scanning technology, a radio frequency reading technology, or a magnetic label reading technology. The communication connection is used to establish the wireless connection to the at least one second module based on the second indication information.

With reference to the third aspect, in a possible implementation, the information about the first module may further include at least one of the following: a model of the first module, a number of the first module, a type of the first module, or an assembly location of the first module in the communication system.

With reference to the third aspect, in a possible implementation, the initial topology configuration information indicates a communication topology structure between modules included in the communication system and/or a communication topology structure between locations of unknown modules to be assembled into the communication system. The determining unit is further configured to determine topology information based on the initial topology configuration information and assembly information of at least one module in a process of assembling the communication system by an assembly device, where the assembly information of the module includes at least one of the following: a sequence in which the module is identified by the assembly device, a location in which the module is identified by the assembly device, and an assembly location or an assembly sequence in which the module is assembled into the communication system. The topology information includes a communication association relationship between the modules included in the communication system, and the information about the first module further includes partial or all content of the topology information.

With reference to the third aspect, in a possible implementation, the first module is configured to replace a third module in the communication system, the third module is a faulty module or a to-be-replaced module, and the determining unit is further configured to:
update the topology information based on the initial topology configuration information of the communication system, the information about the first module, and information about the third module.

With reference to the third aspect, in a possible implementation, the determining unit is further configured to:
determine the third module in any one of the following manners:
determine the third module when detecting the modules included in the communication system; or
receive third indication information from a fourth module by using the communication unit, where the third indication information indicates the third module, and the fourth module includes a non-faulty module in the communication system.

With reference to the third aspect, in a possible implementation, the communication unit is further configured to:
receive the information about the third module from the fourth module.

With reference to the third aspect, in a possible implementation, the communication system may include a battery management system (battery management system, BMS).

With reference to the third aspect, in a possible implementation, the wireless communication identifier of the first module may be an encrypted ciphertext, and the obtaining unit is further configured to:
obtain a plaintext by decrypting the wireless communication identifier of the first module in any one of the following manners:
decrypt the wireless communication identifier of the first module by using a locally stored key, to obtain the plaintext;
receive a key from a server, and decrypt the wireless communication identifier of the first module based on the key, to obtain the plaintext; or
send the wireless communication identifier of the first module to a server, and receive, from the server, the plaintext obtained by decrypting the wireless communication identifier of the first module.

It should be understood that the wireless communication identifier of the first module may be replaced with a wireless communication identifier of the second module, the first indication information, or the second indication information. The assembly device may decrypt the wireless communication identifier of the second module, the first indication information, or the second indication information in any one of the foregoing decryption processing manners, to obtain the corresponding plaintext.

According to a fourth aspect, an embodiment of this application provides a communication system configuration apparatus. The apparatus may include:
a communication unit, configured to: receive information about a first module from an assembly device, where the information about the first module includes a wireless communication identifier of the first module; and establish a communication connection to the first module based on the information about the first module.

With reference to the fourth aspect, in a possible implementation, the communication unit is configured to:
receive the information about the first module from the assembly device through a wired connection to the assembly device.

With reference to the fourth aspect, in a possible implementation, the communication unit is configured to:
receive the information about the first module from the assembly device through a wireless connection to the assembly device.

With reference to the fourth aspect, in a possible implementation, the communication unit is further configured to:
establish the wireless connection to the assembly device in response to a first message from the assembly device, where the first message includes a wireless communication identifier of a second module, and the wireless communication identifier is used for establishing the wireless connection to the assembly device.

That is, the wireless communication identifier that is of the second module and that is used for establishing the connection to the assembly device may be located on the second module, and the wireless communication identifier is identified in any one of the following manners: an image capture technology, an optical scanning technology, a radio frequency reading technology, or a magnetic label reading technology.

That is, a module to be assembled into a communication system may directly carry a second wireless communication identifier of the module. For example, the second wireless communication identifier may be presented as an identification code, including but not limited to a barcode, QR code, a printed letter, a digit, or a symbol. The assembly device may directly read the second wireless communication identifier of the module by using the information reading technology corresponding to the identification code. For example, the assembly device may include a reading module or be connected to a reading module. The reading module is a barcode scanner, a QR code scanner, a radio frequency reader, a magnetic label reader, or the like that adapts to the identification code. This is not limited in embodiments of this application.

With reference to the fourth aspect, in another possible implementation, the communication unit is further configured to:
establish the wireless connection to the assembly device in response to a first message from the assembly device, where the first message includes second indication information, and the second indication information indicates the second module; or
send a second message to the assembly device, where the second message includes second indication information, and the second message is used to request to establish the wireless connection.

In other words, the second indication information is located on the second module. The second indication information is identified in any one of the following manners: an image capture technology, an optical scanning technology, a radio frequency reading technology, or a magnetic label reading technology. The second module may establish the wireless connection to the assembly device by exchanging the message including the second indication information. After establishing the wireless connection to the assembly device, the second module may exchange information through the wireless connection, to provide a first wireless communication identifier of the second module for the assembly device, or receive, from the assembly device, the information about the first module associated with the second module.

With reference to the fourth aspect, in a possible implementation, the information about the first module may further include at least one of the following: a model of the first module, a number of the first module, a type of the first module, or an assembly location of the first module in the communication system.

With reference to the fourth aspect, in a possible implementation, the information about the first module further includes partial or all content of topology information, the topology information indicates a communication association relationship between modules included in the communication system, the topology information is obtained based on initial topology configuration information of the communication system and assembly information of at least one module in a process of assembling the communication system, the initial topology configuration information indicates a communication topology structure between the modules included in the communication system and/or a communication topology structure between locations of unknown modules to be assembled into the communication system, and the assembly information of the module includes at least one of the following: a sequence in which the module is identified by the assembly device, a location in which the module is identified by the assembly device, and an assembly location or an assembly sequence in which the module is assembled into the communication system.

With reference to the fourth aspect, in a possible implementation, the first module is configured to replace a third module in the communication system, the third module is a faulty module or a to-be-replaced module, and the topology information is updated based on the initial topology configuration information of the communication system, the information about the first module, and information about the third module.

With reference to the fourth aspect, in a possible implementation, the second module is a non-faulty module, and the communication unit is further configured to:
send third indication information to the assembly device, where the third indication information indicates the third module.

With reference to the fourth aspect, in a possible implementation, the communication unit is further configured to:
send the information about the third module to the assembly device.

With reference to the fourth aspect, in a possible implementation, the communication system may include a battery management system BMS.

With reference to the fourth aspect, in a possible implementation, at least one of the wireless communication identifier of the first module, the wireless communication identifier of the second module, first indication information, or the second indication information may be an encrypted ciphertext.

According to a fifth aspect, an embodiment of this application provides a communication system configuration apparatus, including at least one processor and an interface circuit. The interface circuit is configured to provide data or code instructions for the at least one processor, and the at least one processor is configured to implement the method according to any one of the first aspect or the possible designs of the first aspect or implement the method according to any one of the second aspect or the possible designs of the second aspect by using a logic circuit or executing the code instructions.

According to a sixth aspect, an embodiment of this application provides an assembly device. The assembly device is configured to implement the method according to any one of the first aspect or the possible designs of the first aspect.

According to a seventh aspect, an embodiment of this application provides a communication system, including at least two modules. Any one of the at least two modules is configured to perform the method according to any one of the second aspect or the possible designs of the second aspect.

According to an eighth aspect, an embodiment of this application provides a computer-readable storage medium. The computer-readable storage medium stores a computer program, and when the computer program is run, the method according to any one of the first aspect and the possible designs of the first aspect is performed, or the method according to any one of the second aspect and the possible designs of the second aspect is performed.

According to a ninth aspect, an embodiment of this application provides a chip system. The chip system includes a processor, configured to invoke a computer program or computer instructions that is/are stored in a memory, so that the processor performs the method according to any one of the first aspect or the possible designs of the first aspect or implements the method according to any one of the second aspect or the possible designs of the second aspect.

With reference to the ninth aspect, in a possible implementation, the processor may be coupled to the memory through an interface.

With reference to the ninth aspect, in a possible implementation, the chip system may further directly include the memory, and the memory stores the computer program or the computer instructions.

According to a tenth aspect, an embodiment of this application provides a computer program product. When the computer program product runs on a computer, the computer is enabled to perform the method according to any one of the first aspect and the possible designs of the first aspect or implement the method according to any one of the second aspect and the possible designs of the second aspect.

### BRIEF DESCRIPTION OF DRAWINGS

FIG. 1 is a diagram of an architecture of a battery management system according to an embodiment of this application;
FIG. 2 is a diagram of an architecture to which an embodiment of this application is applicable;
FIG. 3 is a diagram of a structure of an assembly device according to an embodiment of this application;
FIG. 4 is a diagram of a structure of a module in a communication system according to an embodiment of this application;
FIG. 5 is a schematic flowchart of a communication system configuration method according to an embodiment of this application;
FIG. 6a is a diagram of a configuration principle in a manufacturing assembly scenario according to an embodiment of this application;
FIG. 6b is a diagram of a configuration principle in a maintenance assembly scenario according to an embodiment of this application;
FIG. 7 is a schematic flowchart of a communication system configuration method according to an embodiment of this application;
FIG. 8 is a schematic flowchart of a communication system configuration method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following describes some terms in this application, to facilitate understanding of a person skilled in the art.

### 1. Communication module

The communication module is a module for providing data connectivity, and may also be referred to as a communication apparatus or a communication device. Generally, one communication module may support at least one communication technology, for example, a wired communication technology or at least one wireless communication technology.

In embodiments of this application, a communication system may be, for example, a wireless communication system. If physical assembly is completed, the wireless communication system may include at least two communication modules that support a wireless communication technology, which are referred to as modules for short. The wireless communication system may support at least one wireless communication technology, that is, communication interaction between modules included in the wireless communication system may be implemented by using the at least one wireless communication technology. Communication interaction between any module included in the wireless communication system and another device (for example, the assembly device in embodiments of this application) may be implemented by using the at least one wireless communication technology or another communication technology (for example, a wired communication technology). Communication interaction between the assembly device in embodiments of this application and a module that can be assembled into the wireless communication system but has not completed assembly may also be implemented by using the at least one wireless communication technology or another communication technology (for example, a wired communication technology).

A first module is used as an example. In one aspect, the first module may perform communication interaction with the assembly device. In another aspect, after the first module is assembled into the communication system, there may be a communication association between the first module and another module (for example, a second module) included in the system, so that communication interaction can be performed. In an optional implementation, communication interaction between the first module and the assembly device may be performed through a wireless connection, and communication interaction between the first module and the second module may be performed through a wireless connection. For ease of differentiation, a wireless communication technology used by the first module to establish a wireless connection to the assembly device may be referred to as a second wireless communication technology, a used wireless communication identifier is referred to as a second wireless communication identifier, a wireless communication technology used by the first module to establish a wireless connection to another module in the communication system is referred to as a first wireless communication technology, and a used wireless communication identifier is referred to as a first wireless communication identifier. A wireless communication identifier of the first module included in information about the first module transmitted between the assembly device and the second module includes at least the first wireless communication identifier of the first module, to assist in implementing communication configuration of modules in the communication system. Correspondingly, after receiving the first wireless communication identifier of the first module, the second module may establish a wireless connection to the first module based on the first wireless communication identifier. After a wireless connection is established between different modules in the communication system based on a communication configuration status, wireless communication of the communication system may be implemented. Differentiation and details are not described one by one below again. It should be understood that, in embodiments of this application, the first wireless communication technology and the second wireless communication technology may be the same or different. When the first wireless communication technology is the same as the second wireless communication technology, the first wireless communication identifier and the second wireless communication identifier of the first module are the same. This solution is also applicable to another module that has completed assembly or a to-be-assembled module in addition to the first module in the communication system, and details are not described herein again.

For example, during actual application, the communication module may be a terminal device, including a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device includes a handheld device having a wireless connection function, or a processing device connected to a wireless modem. For example, the terminal device may communicate with a core network through a radio access network (radio access network, RAN), and exchange a voice and/or data with the RAN.

In a specific implementation process, the terminal device may include but is not limited to a vehicle, user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an Internet of things (Internet of things, IoT) terminal device or a Narrowband Internet of things (Narrowband Internet of things, NB-IoT) terminal device, a subscriber unit (subscriber unit), and a subscriber station (subscriber station), a mobile station (mobile station), a mobile console (mobile console), a remote station (remote station), an access point (access point, AP), a remote terminal device (remote terminal), an access terminal device (access terminal), a user terminal device (user terminal), a user agent (user agent), a user device (user device), or the like. For another example, the terminal device may be specifically implemented as: a mobile phone (or referred to as a "cellular" phone), or a computer having a mobile terminal device; a dedicated terminal device in the IoT, an industrial control (industrial control) device, or a telemedicine (telemedicine) device, a smart grid (smart grid) device, or a smart city (smart city) device; a portable, pocket-sized, handheld, computer built-in, or vehicle-mounted mobile apparatus; a personal communication service (personal communication service, PCS) phone, a cordless phone, a session initiation protocol (Session Initiation Protocol, SIP) phone, a wireless local loop (Wireless Local Loop, WLL) station, a personal digital assistant (Personal Digital Assistant, PDA), or the like. In an optional design, the terminal device may be alternatively implemented as a restricted device, for example, a device with low power consumption, a device with a limited storage capability, or a device with a limited computing capability. In an optional design, the terminal device may include components such as a barcode, a radio frequency identification (radio frequency identification, RFID), a sensor, a global positioning system (global positioning system, GPS), and a laser scanner.

In an optional design, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also can implement a powerful function through software support, data exchange, and cloud interaction. In a broad sense, wearable intelligent devices include full-featured and large-sized devices that can implement complete or partial functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

In an optional design, the terminal device may alternatively be a machine intelligent device, for example, a self-driving (self-driving) device, a transportation safety (transportation safety) device, a virtual reality (virtual reality, VR) terminal device, or an augmented reality (augmented reality, AR) terminal device.

If the terminal devices described above are located on a vehicle (for example, placed in the vehicle or mounted in the vehicle), the terminal devices may be considered as vehicle components, for example, a sensor, a battery cell, or a battery module included in a battery management system, or another execution apparatus.

In an optional design, the terminal device may alternatively include a relay (relay). Alternatively, it is understood that the terminal device may include any device that can perform data communication with a base station.

For example, the communication module may alternatively be a network device, for example, including an access network (access network, AN) device. The access network device may include a device, such as a base station or an access point, that is in an access network and that communicates with a wireless terminal device over an air interface through one or more cells. The base station may be configured to: perform conversion between a received over-the-air frame and an internet protocol (Internet Protocol, IP) packet, and serve as a router between the terminal device and a remaining part of the access network. The remaining part of the access network may include an IP network. In an optional design, the network device may include a base station in a 2nd generation (2nd generation, 2G) communication system, or include a base station in a 3rd generation (3rd generation, 3G) communication system, or include a base station in a 4th generation (4th generation, 4G) communication system, for example, an evolved NodeB (NodeB, eNB, or e-NodeB, evolved NodeB) in a long term evolution (long term evolution, LTE) system or a long term evolution-advanced (long term evolution-advanced, LTE-A) system, or may include a next generation NodeB (next generation NodeB, gNB) in a 5th generation (5th generation, 5G) new radio (new radio, NR) system (also referred to as an NR system), or may include a central unit (central unit, CU) and a distributed unit (distributed unit, DU) in a cloud radio access network (cloud radio access network, Cloud RAN) system, and base stations in various future communication systems, for example, a base station in a 6th generation (6th generation, 6G) communication system. This is not limited in embodiments of this application. For another example, the network device may include a network device in V2X, namely, a roadside unit (roadside unit, RSU). The RSU may include a fixed infrastructure entity supporting a V2X application, and may exchange a message with another entity supporting the V2X application.

It should be understood that, in some technical scenarios, electronic devices with similar data receiving and sending capabilities may not be referred to as communication modules. However, for ease of description, in embodiments of this application, electronic devices with the data receiving and sending capabilities are collectively referred to as a communication module, and are referred to as a module for short.

### 2. Wired communication (wired communication) technology

The wired communication is a communication mode, and generally is wired communication between communication modules, in other words, a mode of transmitting information through a tangible medium like a metal wire or an optical fiber. An optical or electrical signal may represent a sound, a text, an image, or the like.

### 3. Wireless communication (Wireless communication) technology

Wireless communication is a communication mode, generally is transmission communication performed between communication modules without propagation that is performed through a conductor or a cable, and generally includes a long-range wireless communication technology, a short-range wireless communication technology, and the like.

A wireless communication technology used in embodiments of this application may be, for example, a short-range wireless communication technology, including that two communication parties transmit information through a radio wave and a transmission distance falls within a short range (for example, within 100 meters), which may be referred to as short-range wireless communication. The short-range wireless communication technology includes but is not limited to a Bluetooth (Bluetooth) technology, a wireless fidelity (wireless fidelity, Wi-Fi) technology, a near field communication (near field communication, NFC) technology, a Wi-Fi Aware technology, a universal short-range communication technology, a short-range wireless communication technology defined by the NearLink Alliance, or the like. The short-range wireless communication can be widely used in various aspects such as file transfer, remote control, projection, and sensing of surrounding devices (such as an intelligent automobile, an intelligent terminal device, a smart home device, and a smart manufacturing device). The following lists several examples of short-range wireless communication technologies.

Bluetooth is a radio technology that supports short-range communication between devices, and can be used for wireless information exchange between a plurality of devices such as a mobile phone, a wireless headset, a notebook computer, and a related peripheral. The "Bluetooth" technology can be used to effectively simplify communication between mobile communication terminal devices, and successfully simplify communication between a device and the Internet, so that data is transmitted more rapidly and efficiently, and a path for wireless communication is widened.

The wireless fidelity (wireless fidelity, Wi-Fi) technology is also referred to as a wireless local area network (wireless local area network, WLAN) direct connection or Wi-Fi Direct, and may exist in the Wi-Fi protocol suite that enables devices to easily connect to each other without an intermediary wireless access point. Usage of the wireless fidelity technology ranges from web browsing to file transfer, and the wireless fidelity technology enables a plurality of devices to communicate with each other simultaneously, which can take full advantage of a Wi-Fi speed. Devices that comply with this standard can be easily interconnected even if the devices come from different manufacturers.

The Wi-Fi Aware technology is responsible for sensing and discovery in a Wi-Fi technology, and can help a Wi-Fi device sense a surrounding service, for example, a surrounding device, to implement peer-to-peer (Peer-to-Peer, P2P) message exchange between two devices within a short range by using Wi-Fi Aware. Because Wi-Fi Aware can sense a surrounding device, a plurality of functions may be implemented, for example, sensing a nearby person and establishing a connection, adding a friend, playing a same game, or the like; or discovering a surrounding device and implementing photo sharing or location sharing; or securely sending a file to a printer without accessing a network (for example, a cellular or wireless network).

It should be noted that, in addition to the foregoing listed short-range wireless communication technologies, another existing short-range wireless communication technology, or another short-range wireless communication technology that may appear in the future with evolution of communication technologies may also be applicable to embodiments of this application.

### 4. Transmitted information about a module

In embodiments of this application, the transmitted information about the module is related information associated with the module. The information may be understood in a plurality of manners.

For example, the transmitted information about the module may include information about the module (or referred to as basic information of the module), such as a wireless communication identifier, a type, a number, a model, or a device parameter of the module, or an assembly location of the module in a communication system.

For another example, the transmitted information about the module may alternatively be understood as information associated with the module, such as a wireless communication identifier, a type, a number, a model, or a device parameter of another module (which may also be referred to as an association module) that has a communication association relationship (or another association relationship) with the module, or an assembly location of the association module in a communication system.

For another example, the transmitted information about the module may alternatively include partial or all content of topology information, and the topology information may indicate a communication association relationship between modules included in a communication system.

Specific content included in the information about the module used for transmission is not limited in embodiments of this application. In different scenarios or for different service requirements, specific content of information about modules that needs to be exchanged between the communication system and an external device and between different modules in the communication system may be determined according to a requirement. The content may include but is not limited to the foregoing examples. This is not limited in embodiments of this application. For details, refer to detailed descriptions in the following embodiments.

### 5. Topology information

Generally, a communication system may include a plurality of modules, communication interaction can be performed between at least two modules in the plurality of modules, and the topology information indicates a communication association relationship between the at least two modules.

### 6. Battery management system (battery management system, BMS)

The battery management system provides a battery management function. The battery management function may include but is not limited to monitoring a status of a battery (for example, a voltage, a current, a temperature, or deformation of the battery), calculating a charging level and a capacity of the battery, controlling charging and discharging of the battery, and a communication function.

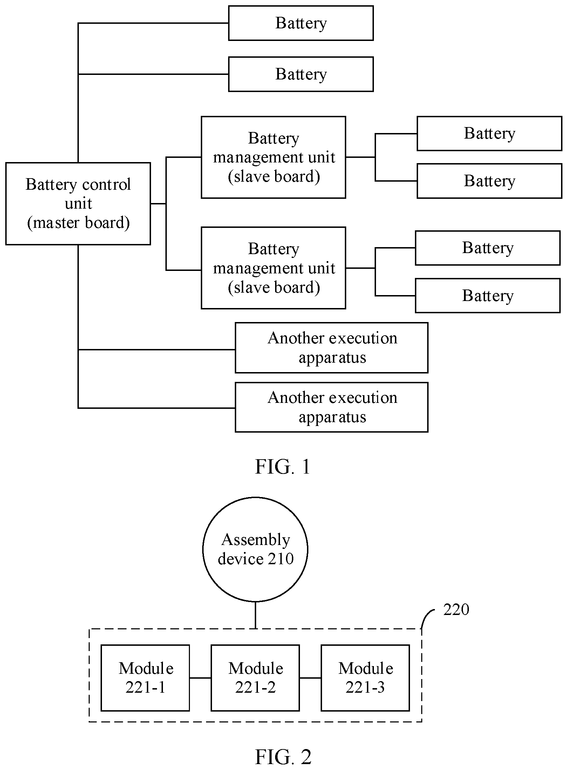

Generally, the BMS includes a battery control unit (which may be referred to as a master board for short), a battery management unit (which may be referred to as a slave board for short), a sensor (for example, a temperature sensor, a current sensor, a voltage sensor, or a smoke sensor), and a controlled/managed battery or another execution apparatus (for example, a vapor chamber or a heating apparatus), where the controlled/managed battery may include a battery cell or a battery module, as shown in FIG. 1. It may be considered that a management node is deployed on the master board, and a terminal node may be deployed on the slave board. Communication interaction may be performed between the management node and the terminal node, to implement the battery management function. For example, after the terminal node deployed on the slave board obtains corresponding information about the battery cell, the terminal node may send the information about the battery cell to the management node, and the management node performs a corresponding battery management function based on the received information about the battery cell.

During actual application, the BMS may be an example of the communication system in embodiments of this application. The battery control unit, the battery management unit, and the controlled/managed battery or the another execution apparatus in the BMS may all serve as communication modules in the communication system, and may perform communication interaction with another module in the communication system or an external electronic device.

### 7. Battery cell

The battery cell is a component of a battery. Optionally, the battery may further include a protection circuit board. The protection circuit board is an integrated circuit board for protecting the battery cell. The protection circuit board may include at least one of a protection chip, a metal-oxide-semiconductor (metal-oxide-semiconductor, MOS) field-effect transistor, a resistor, a capacitor, or a printed circuit board (printed circuit board, PCB). The protection circuit board may be configured to control the battery cell to perform charging, discharging, power-off, or another processing.

In some embodiments of this application, the battery management unit in the BMS may be associated with one or more battery cells. Therefore, information about the battery reported by the battery management unit to the battery control unit may include information about the one or more battery cells. In some other possible embodiments, the battery management unit may be associated with one or more cells and the protection circuit board. Therefore, information about the battery reported by the battery management unit to the battery control unit may include information about the one or more cells and information about the protection circuit board. In addition, in some other possible embodiments, the battery management unit may be associated with the protection circuit board. Therefore, information about the battery reported by the battery management unit to the battery control unit may include information about the protection circuit board.

### 8. Battery module

When a plurality of battery cells are packaged together by a same housing frame and are connected to the outside through a unified boundary, a module is formed. One battery may include one or more battery modules. In some embodiments of this application, the terminal node in the BMS may be disposed in a battery module. Therefore, the information about the battery cells that is reported by the battery management unit to the battery control unit may include information about a plurality of battery cells in at least one battery module.

It should be noted that, in embodiments of this application, "at least one" means one or more, and "a plurality of means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise specified, ordinal numbers such as "first", "second", and "third" mentioned in embodiments of this application are used to distinguish between a plurality of obj ects, but are not used to limit priorities or importance of the plurality of obj ects. For example, the first module and the second module are merely used to distinguish between different communication modules, but do not indicate different priorities, importance, or the like of the three communication modules.

FIG. 2 is a diagram of an architecture to which an embodiment of this application is applicable.

As shown in FIG. 2, the architecture may include an assembly device 210 and a communication system 220. The communication system 220 may include at least two modules 221 (where the at least two modules are the foregoing communication modules), for example, modules 221-1, 221-2, and 221-3 shown in FIG. 2.

The assembly device 210 may also be referred to as a host computer of the communication system, and may be configured to manufacture/maintain/disassemble and reassemble the communication system 220 in a manufacturing/maintenance/disassembly and reassembly scenario or another scenario. That the assembly device 210 manufactures the communication system 220 may include: The assembly device 210 performs physical assembly, communication configuration, and the like on different modules 221 that need to be assembled into the communication system 220. That the assembly device 210 maintains the communication system 220 may include: The assembly device 210 performs a discovery operation, a disassembly operation, a replacement operation, communication configuration, and the like on a faulty module (or a to-be-replaced module) in the communication system 220. That the assembly device 210 disassembles and reassembles the communication system 220 may include: The assembly device 210 performs a disassembly operation on a module included in the communication system 220, performs a reassembly operation on an old module disassembled from another system, or the like. That is, a disassembled module in a specific communication system may be further reassembled and used in another system.

In the manufacturing/maintenance/disassembly and reassembly process, the assembly device 210 may exchange, according to a scenario requirement, a service requirement, or the like, related information with the modules 221 included in or to be assembled into the communication system 220, to implement communication configuration of the modules included in the communication system.

For example, any module included in the communication system serves as a target module. For example, the assembly device 210 may deliver information to the target module. The delivered information may include, for example, a first wireless communication identifier of an association module of the target module, and the association module is also assembled into the communication system. Therefore, after assembly is completed and the communication system 220 is put into use and works, in the modules 221 included in the communication system 220, the target module may establish, based on the first wireless communication identifier of the association module of the target module, a wireless connection to and perform communication interaction with the association module, to implement wireless communication of the communication system, to implement a corresponding service of the communication system.

An association relationship between the target module and the association module of the target module may be alternatively replaced with other association management other than a communication association relationship, for example, a service association relationship, to implement service configuration of the modules included in the communication system. This is not limited in embodiments of this application.

In an optional implementation, the delivered information may further include information such as a type, a number, a model, or a device parameter of the association module of the target module, or an assembly location of the association module in the communication system. In another optional implementation, the delivered information may further include partial or all content of topology information, and the topology information may indicate a communication association relationship (or another association relationship in another scenario, for example, a service association relationship) between the modules included in the communication system. To be specific, when the assembly device performs communication configuration on the target module in the communication system 220, the assembly device needs to deliver at least the first wireless communication identifier of the association module of the target module to the target module when serving as an information transmit end, so that the target module establishes the wireless connection to the association module based on the first wireless communication identifier. The assembly device may further selectively deliver other information to the target module as required. Specific content of exchanged information is not limited in embodiments of this application.

After receiving the delivered information, the target module implements functions such as identification, communication, positioning, and management for the associated module based on the information, to provide functions such as providing a specific service (for example, the service may include but is not limited to: reporting specific measurement data or triggering enabling/disabling of a heating or cooling function) for the associated module; and implements functions such as storing a correspondence between some or all modules in the communication system and assembly locations thereof (for example, the stored information may be used by the target module to provide corresponding information for the assembly device in the maintenance scenario).

For another example, in an assembly process or after assembly is completed, a module to be assembled into the communication system or any module included in the communication system (which may be originally included or may be currently assembled) serves as the target module. The assembly device 210 may receive information from the target module. For example, the received information may include but is not limited to a first wireless communication identifier, a type, a number, a model, or a device parameter of the target module, or an assembly location of the target module in the communication system. Optionally, in the maintenance or disassembly and reassembly scenario, the received information may further include, for example, partial or all of topology information stored by the target module, and the topology information may indicate a communication association relationship between the modules included in the communication system to which the target module belongs. Optionally, the received information may include indication information, and the indication information may indicate at least one of the faulty module, the to-be-replaced module, or a to-be-disassembled module in the communication system to which the target module belongs.

In other words, when serving as an information receive end, the assembly device may receive, from the target module, the first wireless communication identifier, the type, the number, the model, or the device parameter of the target module, the assembly location of the target module in the communication system, or the like.

In different scenarios, specific content of information exchanged between the assembly device 210 and different target modules may be different. The following provides detailed descriptions with reference to the accompanying drawings and embodiments, and details are not described herein.

It may be understood that, in embodiments of this application, communication interaction between the assembly device 210 and the modules to be assembled into the communication system 220 or the modules 221 that have been assembled into the communication system 220 may be performed in a wired or wireless manner. Communication interaction between the modules 221 included in the communication system 220 may also be performed in a wireless manner. In FIG. 2, a connection line located between different modules 221 or a connection line located between the assembly device 210 and the communication system 220 only indicates that communication interaction can be performed between two connected parties, and does not constitute a limitation on a communication mode. In an optional implementation, some modules included in the communication system 220 may further support a wired communication mode. This is not limited in this application.

It should be noted that, in embodiments of this application, establishment or a change of the communication association relationship between the modules 221 in the process of manufacturing/maintaining/disassembling and reassembling the communication system 220 is mainly concerned, and services or functions specifically implemented by the communication system 220 and the modules 221 in the communication system 220 are not limited, and product forms of the modules are not limited. In some embodiments, the communication system 220 may be a communication system including a plurality of devices in an intelligent vehicle (an inter-device communication system fastened to the vehicle), and the plurality of devices are the modules 221 in the communication system 220. In some other embodiments, the communication system 220 may be a communication system including terminal devices in a smart home, and the terminal devices are the modules 221 in the communication system 220. In some other embodiments, the communication system 220 may be a communication system including a plurality of manufacturing devices and/or management devices in a smart factory, and the manufacturing devices/management devices are the modules 221 in the communication system 220. In some other embodiments, the communication system 220 may be a communication system including a plurality of communication modules in a device/product, or the like. An application scenario, a service scenario, or the like of the communication system 220 is not limited in embodiments of this application.

It should be noted that the architecture shown in FIG. 2 does not constitute a limitation on an architecture to which embodiments of this application are applicable. A quantity of modules included in the communication system in FIG. 2 is merely an example, and different modules included in a same communication system may be configured to implement a same function, or may be configured to implement different functions. This is not limited in embodiments of this application.

In addition, the assembly device 210 is an electronic device for implementing functions such as manufacturing/maintaining/disassembling and reassembling the communication system. The assembly device 210 may be any electronic device that can implement an assembly process of the communication system, and may be an automation device, an assembly line device, or the like. In addition, the assembly device is only a functional name of the electronic device for implementing the assembly process, and does not limit a device structure, a device function, or the like of the assembly device. In some embodiments, the assembly device may include one or more subdevices (or referred to as submodules), and the one or more subdevices (or submodules) may collaboratively implement the functions such as manufacturing/maintaining/disassembling and reassembling the communication system.

For ease of understanding, the following describes structures and functions of the assembly device 210 and the modules 221 included in the communication system 220 in FIG. 2.

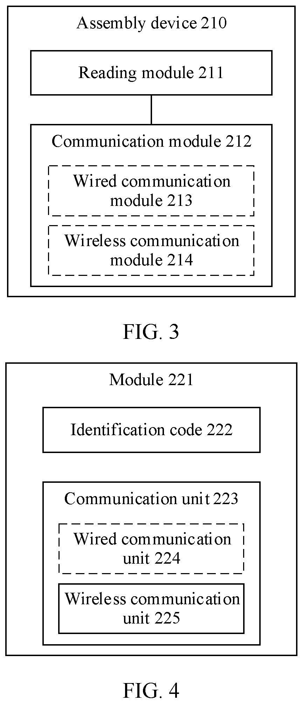

FIG. 3 is a diagram of a structure of the assembly device according to this embodiment of this application. FIG. 4 is a diagram of a structure of a module 221 included in the communication system according to this embodiment of this application.

As shown in FIG. 3, the assembly device 210 may include a reading module 211 (or may be connected to a reading module 211) and a communication module 212. The reading module 211 may support at least one information reading technology, and the at least one information reading technology may be used to identify an identification code 222 carried by the module 221 in an assembly process or after assembly is completed. The communication module 212 supports at least one communication technology, and may be configured to implement communication between the assembly device 210 and the outside (for example, a module to be assembled into the communication system or a module included in the communication system). As shown in FIG. 4, the module 221 may include the identification code 222 and a communication unit 223. The identification code 222 may be located on the module 221. The identification code 222 may indicate the module 221, and may be identified by the reading module 211. The communication unit 223 is configured to implement communication between the module 221 and the outside (for example, the assembly device or another module included in the communication system).

The identification code 222 may have at least one implementation, including but not limited to content such as a barcode, QR code, a letter, a digit, or a symbol, or a combination of a plurality of types of content. The module 221 may carry the identification code 222 in the following manners: printing, steel printing, engraving, etching, embedding, or packaging on a surface of the module; printing, steel printing, engraving, etching, embedding, or packaging on a label or another attached object that is pasted on, attached to, or bound to a surface of the module; printing, steel printing, engraving, etching, embedding, packaging, or pasting on an outer package of the module; or the like. This is not limited in this application.

The at least one information reading technology supported by the reading module 211 may include but is not limited to an image capture technology, an optical scanning technology, a radio frequency reading technology, a magnetic label reading technology, or the like. The reading module 211 has a product form that matches an information reading technology supported by the reading module 211.

It should be understood that, during actual application, the reading module 211 may have different product forms based on different used information reading technologies. For example, when the image capture technology is used, the reading module 211 may be implemented as a camera, a camera compact module, or the like, and is configured to capture an image of the identification code 222. When the optical scanning technology is used, the reading module 211 may be implemented as an active optical scanner or a passive optical scanner, and may be configured to scan and identify the identification code 222. When the radio frequency reading technology is used, the reading module 211 may be implemented as a radio frequency reader, and may be configured to read and identify the identification code 222. When the magnetic label reading technology is used, the reading module 211 may be implemented as a magnetic label reader, and is configured to read and identify the identification code 222. The reading module 211 may be implemented as an internal component of the assembly device 210, or may be implemented as an associated component outside the assembly device 210. The assembly device 210 may be connected to the reading module 211 (the association manner is not shown in FIG. 3). There may be at least one reading module 211 in the assembly device 210. A product form of the reading module, a quantity of reading modules, or the like of the reading module is not limited in embodiments of this application.

When the assembly device 210 works, the reading module 211 in the assembly device 210 may read, by using an information reading technology that matches the identification code 222 of the module 221, information indicated by the identification code 222, to identify the module 221. Further, the communication module 212 in the assembly device 210 may perform communication interaction with the module 221 through a communication connection to the communication unit 223. Information exchanged between the assembly device 210 and the module 221 may be used to implement communication configuration of the module 221 or an associated module of the module 221 in the process of manufacturing/maintaining/disassembling and reassembling the communication system 210.

In this embodiment of this application, the module 221 needs to support at least one wireless communication mode, so that the module 221 performs wireless communication with another module in the communication system 220 to which the module 221 belongs, to implement a corresponding service. The assembly device 210/module 221 may support at least one communication mode, for example, a wired communication mode or a wireless communication mode, so that communication interaction is performed between the assembly device 210 and the module 221.

As shown in FIG. 3, the communication module 212 may include a wired communication module 213 and/or a wireless communication module 214. The wired communication module 213 may be configured to perform communication interaction through a wired connection between the assembly device 210 and the module 221. The wireless communication module 214 may be configured to: establish a wireless connection between the assembly device 210 and the module 221, and perform communication interaction through the wireless connection. As shown in FIG. 4, the communication unit 223 may include a wireless communication unit 225. In another optional example, the communication unit 223 may further include a wired communication unit 224. The wired communication unit 224 may be configured to perform communication interaction through a wired connection between the module 221 and the assembly device 210. The wireless communication unit 225 may be configured to: establish a wireless connection between the module 221 and an external device (including the assembly device 210 or another module in the communication system 220), and perform communication interaction through the wireless connection. It should be understood that, in FIG. 3 and FIG. 4, a dashed box indicates an optional unit/module, and a specific communication technology used by the assembly device 210/module 221 is not limited.

In embodiments of this application, when different communication modes are used between the assembly device 210 and the module 221, information exchanged between the assembly device 210 and the module 221 may be different. In different implementation scenarios, implementation details of a communication system configuration solution in embodiments of this application are also different. For ease of understanding, the following provides detailed descriptions with reference to embodiments and method flowcharts.

A communication system configuration method in embodiments of this application may be implemented by the assembly device 210 and the at least two modules 221 described above. For ease of differentiation, the at least two modules 221 may be respectively represented as a first module, a second module, a third module, and a fourth module below. In the manufacturing scenario of the communication system, the first module, the second module, the third module, or the fourth module may indicate a module assembled into the communication system. It is assumed that there is a communication association relationship between the first module and the second module after assembly is completed. In the maintenance scenario of the communication system, the third module indicates a faulty module or a to-be-replaced module included in a to-be-maintained communication system. Before maintenance, there is a communication association relationship between the third module and the second module. The first module may indicate a new module configured to replace the third module. After the maintenance is completed, there is a communication association relationship between the first module replacing the third module and the second module. The fourth module indicates a non-faulty module in the communication system. In the disassembly and reassembly scenario of the communication system, the third module may indicate a to-be-disassembled module in a disassembled communication system, the first module, the second module, and the fourth module are to-be-reassembled modules in a reassembled communication system, and there is a communication association relationship between the first module and the second module. In different scenarios, interaction details between the assembly device and the at least two modules 221 may be different.

The following first describes a configuration principle of the communication system in embodiments of this application.

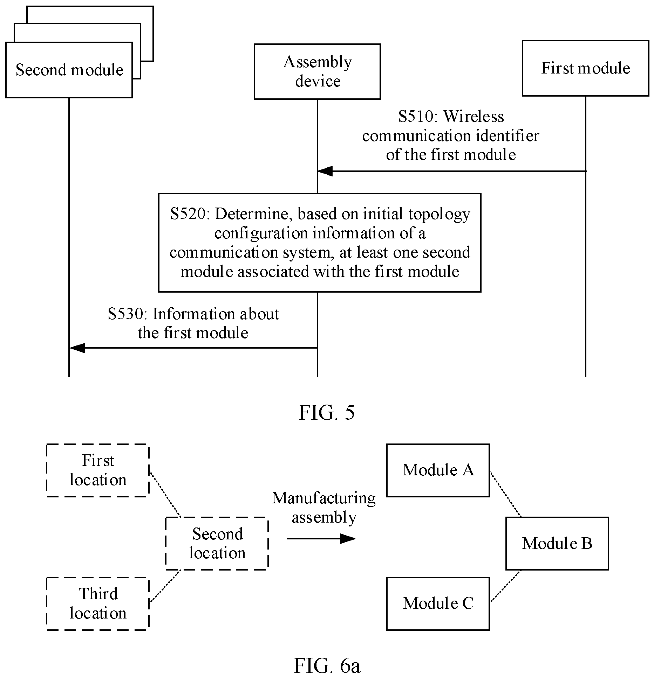

FIG. 5 is a schematic flowchart of a communication system configuration method according to an embodiment of this application. As shown in FIG. 5, the method may include the following steps.

S510: An assembly device obtains a wireless communication identifier of a first module.

In this embodiment of this application, a first wireless communication identifier of the first module is specifically obtained in S510, and the first wireless communication identifier may be used by the first module to establish a wireless connection to another module in a communication system. S510 may include the following two implementations.

Implementation 1: An identification code located on the first module indicates the first wireless communication identifier of the first module. The assembly device may directly read the identification code of the first module by using an information reading technology, to obtain the first wireless communication identifier of the first module.

Implementation 2: The assembly device may receive the first wireless communication identifier from the first module through a wired connection to the first module.

Implementation 3: An identification code located on the first module is first indication information, and the first indication information indicates the first module. The assembly device may obtain the first indication information by using an information reading technology, establish a wireless connection between the assembly device and the first module based on the first indication information, and receive the first wireless communication identifier of the first module from the first module through the wireless connection.

In both Implementation 1 and Implementation 3, the information reading technologies described above in embodiments of this application may be used, for example, any one of the following: the image capture technology, the optical scanning technology, the radio frequency reading technology, or the magnetic label reading technology, to read information indicated by the identification code on the first module. Specifically, a target information reading technology specifically used by the assembly device may be determined with reference to an implementation scenario or a service scenario. Details are not described herein again.

In Implementation 2, when wired communication interaction is performed between the assembly device and the first module, the assembly device may request to obtain the first wireless communication identifier of the first module from the first module, or the first module may actively send the first wireless communication identifier of the first module to the assembly device. This communication interaction mode is not limited in embodiments of this application.

In Implementation 3, the first indication information read by the assembly device indicates the first module, for example, may indicate a module identifier of the first module or a second wireless communication identifier of the first module. Further, the assembly device establishes the wireless connection to the first module based on the first indication information.

For example, the wireless connection between the assembly device and the first module may be established by using a short-range wireless communication technology, and the connection establishment process may include any one of the following implementations.
(1) The assembly device may send a message including the first indication information to the first module, where the message is represented as a first message. After detecting the first message, the first module identifies the first indication information carried in the first message, and sends a response message to the assembly device, to establish the wireless connection between the assembly device and the first module.
(2) The first module may know the first indication information carried by the first module. The first module sends a second message including the first indication information. After detecting the second message, the assembly device identifies whether the first indication information carried in the second message matches the first indication information obtained by the assembly device by using the information reading technology. If the first indication information carried in the second message matches the first indication information obtained by the assembly device by using the information reading technology, the assembly device sends a response message to the first module, to establish the wireless connection between the assembly device and the first module.

The first message/second message may be a connection request message or a broadcast message. For example, when the first indication information indicates the second wireless communication identifier of the first module, the first message/second message may be a connection request message, and is used to request to establish the wireless connection to the first module. Alternatively, when the first indication information indicates the module identifier of the first module, the first message/second message may be a broadcast message, and is used to indicate to establish the wireless connection to the first module.

Further, communication interaction between the assembly device and the first module may be performed through the established wireless connection, and the first wireless communication identifier of the first module may be carried in an interaction message sent by the first module to the assembly device through the wireless connection. The first module may actively report the first wireless communication identifier to the assembly device after establishing the wireless connection to the assembly device. Alternatively, the assembly device may request to obtain the first wireless communication identifier from the first module after establishing the wireless connection to the first module. An interaction mode of the first wireless communication identifier of the first module is not limited in embodiments of this application.

It should be noted that, in embodiments of this application, the short-range wireless communication technology used for establishing the wireless connection between the assembly device and the first module is merely an example for description, and a wireless communication technology specifically used between the two communication parties is not limited. For example, a Bluetooth technology may be used in some embodiments, a short-range wireless communication technology defined by the NearLink Alliance may alternatively be used in some other embodiments, and a long-range wireless communication technology may alternatively be used in some other embodiments. Details are not described herein again.

S520: The assembly device determines, based on initial topology configuration information of the communication system, at least one second module associated with the first module.

In this embodiment of this application, the initial topology configuration information indicates a communication topology structure between modules included in the communication system and/or a communication topology structure between locations of unknown modules to be assembled into the communication system, but does not indicate an association between at least one module included in the communication system and a specific module.

It should be noted that, in this embodiment of this application, the communication topology structure is a topology structure used for module assembly, and is a topology structure at a location level, and modules in at least some locations are unknown. In a process of assembling the communication system, the assembly device may obtain assembly information of at least one module to be assembled into the communication system. A specific module actually assembled in a specific location can be known only after assembly is completed. Specific modules between which there is a communication association relationship are known based on information about the actually assembled module and the communication topology structure. In this way, the assembly device may establish topology information based on the initial configuration information and the assembly information of the at least one module, where the topology information indicates a communication association relationship between modules included in the communication system.

For example, the initial topology configuration information may indicate that there is one module associated with the second module, but does not indicate a specific module associated with the second module. After the assembly device physically assembles the first module into the communication system, when determining, based on the initial topology configuration information and assembly information of the first module, that the first information is assembled into a location having a communication association relationship with the second module, the assembly device may determine that a module having the communication association relationship with the second module is specifically the first module. In other words, the first module is associated with the second module.

The assembly may include at least one of manufacturing assembly, maintenance assembly, or disassembly and reassembly described in embodiments of this application. In different scenarios, the initial topology configuration information that is of the communication system and that is used by the assembly device may be understood differently according to a scenario requirement. The following provides explanations and descriptions with reference to different cases.

For example, in Case 1, in a manufacturing scenario of the communication system, the initial topology configuration information is specifically information about a framework of a to-be-assembled communication system. The framework is a blank framework, that is, no module is temporarily assembled into the to-be-manufactured communication system. The information about the framework specifically specifies a location in which a module of a specific type/attribute needs to be assembled, to implement physical assembly of the communication system; and indicates specific locations in which modules that are assembled and between which there is a communication association relationship, to obtain the communication association relationship between the modules included in the communication system. For example, as shown on the left side in FIG. 6a, the initial topology configuration information indicates a first location, a second location, and a third location, there is a communication association relationship between a to-be-assembled module in a first location and a to-be-assembled module in a second location, and there is a communication association relationship between the to-be-assembled module in the second location and a to-be-assembled module in a third location.

In a manufacturing assembly process, the assembly device may assemble a specific module of a corresponding type or attribute in a corresponding location based on the information about the framework. After assembly is completed, the assembly device may determine a specific module specifically assembled in each location in the communication system. As shown on the right side in FIG. 6a, for example, a module A is assembled in the first location, a module B is assembled in the second location, and a module C is assembled in the third location. Further, the assembly device may determine, based on the initial topology configuration information of the communication system and assembly information that is of each module and that is obtained in the assembly process, the communication association relationship between the modules included in the communication system. For example, there is a communication association relationship between the module A and the module B, and there is a communication association relationship between the module B and the module C. The assembly device may establish topology information based on known information, where the topology information may indicate the communication association relationship between the modules included in the communication system. If the first module indicates the module A in FIG. 6a, and the second module indicates the module B and the module C in FIG. 6a, or if the first module indicates the module B, and the second module indicates the module A or the module C, or if the first module indicates the module C, and the second module indicates the module A or the module B, in the foregoing manufacturing assembly process, the assembly device may determine, based on the initial topology configuration information, the at least one second module associated with the first module.

For another example, in Case 2, in a maintenance assembly scenario of the communication system, a new module needs to be used to replace a faulty module or a to-be-replaced module in the communication system. The initial topology configuration information indicates at least a communication association relationship between an assembly location corresponding to the faulty module or the to-be-replaced module included in the communication system and another module included in the communication system, but does not indicate that the new module used to replace the faulty module is a specific module. During maintenance assembly, the assembly device may use the new module to replace the faulty module or the to-be-replaced module, and update the topology information of the communication system based on information about the new module.

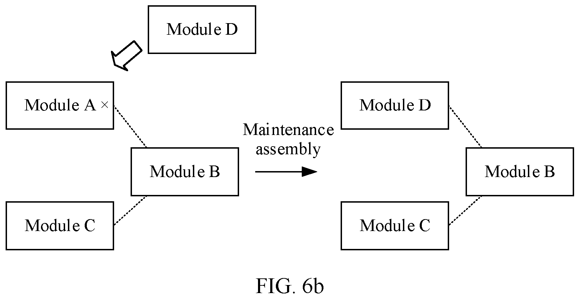

As shown on the left side in FIG. 6b, a module D is the new module, and the module A is the faulty module or the to-be-replaced module in the communication system (where the " x" is used as an example to indicate that the module is faulty or the module is to be replaced). When the module A is not replaced, there is a communication association relationship between the module B and the module A, and the initial topology configuration information may indicate at least the communication association relationship between the module A and the module B, but does not include information indicating that the module A is replaced with the module D. To maintain the communication system, the module A needs to be replaced with the module D. In a module replacement process or after module replacement is completed, the assembly device may know that the module D replaces the module A, to determine at least one module associated with the module D, for example, the module B, as shown on the right side in FIG. 6b. If the first module indicates the module D, the second module indicates the module B, and a third module indicates the module A, in the foregoing process, the assembly device may determine, based on the initial topology configuration information, the at least one second module associated with the first module.

For another example, in Case 3, in a disassembly and reassembly scenario of the communication system, the initial topology configuration information is specifically information about a framework of a reassembled communication system. The information about the framework specifically specifies a specific location in which a module of a specific type/attribute needs to be assembled into the reassembled communication system, and specific locations in which modules that are assembled and between which a communication association relationship needs to be established. Some or all modules in the reassembled communication system may be old modules obtained by disassembling from another communication system. A process in which the assembly device obtains first wireless communication identifiers of the old modules may occur in a disassembly process, after disassembly is completed, in a reassembly process, or after reassembly is completed. Other steps of a method for establishing the communication association relationship between the modules in the reassembled communication system with assistance of the assembly device are similar to those in the foregoing manufacturing assembly scenario or maintenance assembly scenario. If the reassembled communication system is completely reassembled by modules disassembled from the another communication system, refer to related descriptions in Case 1. If the reassembled communication system is reassembled by a remaining module in the communication system that is not completely disassembled and a module disassembled from another communication system, refer to related descriptions in Case 2. Details are not described herein again. Therefore, in a manner similar to Case 1 or Case 2, the assembly device may determine, based on the initial topology configuration information, the at least one second module associated with the first module.

It should be noted that, in this embodiment of this application, a dashed connection line between different modules shown in FIG. 6a and FIG. 6b indicates that there is a communication association relationship between two modules, and a wireless communication connection can be established. After communication configuration is completed for the communication system and the modules included in the communication system are powered on, the wireless communication connection between the modules having the communication association relationship is established based on the communication configuration. A communication association relationship between the first module and the at least one second module may be a physical association relationship. For example, the communication association relationship is a relationship between module locations or an association relationship between module pins when the first module and the at least one second module are deployed on a chip. Details are not described herein again.

S530: The assembly device sends information about the first module to the at least one second module.

In this embodiment of this application, the information about the first module sent by the assembly device to the second module in S530 may be referred to as information about the first module used for transmission. The information about the first module may be used for establishing a wireless connection between the first module and the at least one second module.

For example, the information about the first module may include the first wireless communication identifier of the first module. Further, any second module may establish a wireless connection to the first module based on the first wireless communication identifier of the first module, to implement wireless communication of the communication system. Therefore, when the communication system operates, communication interaction between the first module and the at least one associated second module may be performed through the established wireless connection, to collaboratively implement a corresponding service of the communication system.

For example, the wireless connection between the first module and each second module may be established by using a short-range wireless communication technology, and the connection establishment process may include any one of the following implementations.
(1) The first module may send a message including the first wireless communication identifier of the first module to the second module, where the message is represented as a first message. After detecting the first message, the second module sends a response message to the first module, to establish the wireless connection to the first module. For example, the first message may be a broadcast message.
(2) The second module may send a message including the first wireless communication identifier of the first module to the first module, where the message is represented as a second message. After detecting the second message, the first module sends a response message to the second module, to establish the wireless connection to the second module. For example, the first message may be a broadcast message or a connection request message.

It should be noted that, in this embodiment of this application, an implementation for communication interaction between any second module in the at least one second module and the assembly device is similar to the implementation for communication interaction between the first module and the assembly device. For any second module in the at least one second module, the assembly device may specifically perform communication interaction with the second module in the following implementations.

Implementation 3: The assembly device sends the information about the first module to the second module through a wired connection to the second module.

Implementation 4: The assembly device sends the information about the first module to the second module through a wireless connection to the second module.

The assembly device may establish the wireless connection to the second module in a manner similar to that of establishing the connection to the first module. For example, the process may include the following implementations.

Implementation 4-1: An identification code located on the second module may indicate a second wireless communication identifier of the second module. The assembly device may directly read the identification code of the second module by using an information reading technology, to obtain the second wireless communication identifier of the second module. Further, the assembly device may establish the wireless connection to the second module based on the second wireless communication identifier.

Implementation 4-2: An identification code located on the second module is second indication information, where the second indication information indicates the second module, for example, indicates a module identifier of the second module. The assembly device may obtain the second indication information by using an information reading technology. Further, the assembly device may establish the wireless connection to the second module based on the second indication information.

In both Implementation 4-1 and Implementation 4-2, the assembly device may read the identification code on the second module by using the information reading technology. The information reading technology includes any one of the following: an image capture technology, an optical scanning technology, a radio frequency reading technology, or a magnetic label reading technology. In some embodiments, the second indication information may alternatively indicate a second wireless communication identifier of the second module.

For example, the wireless connection between the assembly device and the second module may be established by using a short-range wireless communication technology, and the connection establishment process may include any one of the following implementations.
(1) The assembly device may send a message including the second wireless communication identifier of the second module/second indication information to the second module, where the message is represented as a first message. After detecting the first message, the second module identifies the second wireless communication identifier/second indication information carried in the first message, and sends a response message to the assembly device, to establish the wireless connection between the assembly device and the second module. The first message may be a connection request message or a broadcast message.
(2) The second module may know the second wireless communication identifier/first indication information carried by the second module. The first module sends a message including the second wireless communication identifier of the second module/second indication information, where the message is represented as a second message. After detecting the second message, the assembly device identifies whether the second wireless communication identifier/first indication information carried in the second message matches the second wireless communication identifier/second indication information obtained by the assembly device by using the information reading technology. If the second wireless communication identifier/first indication information carried in the second message matches the second wireless communication identifier/second indication information obtained by the assembly device by using the information reading technology, the assembly device sends a response message to the second module, to establish the wireless connection between the assembly device and the second module. The second message may be a connection request message or a broadcast message.

It should be noted that, in this embodiment of this application, when a wireless communication technology is used for both communication interaction performed between the assembly device and a module in the communication system and communication interaction performed between any two associated modules in the communication system, a same wireless communication technology may be used, for example, a short-range wireless communication technology defined by the NearLink Alliance; or different wireless communication technologies may be used. For example, a Bluetooth technology is used for the communication interaction between the assembly device and the module in the communication system, and a short-range wireless communication technology defined by the NearLink Alliance is used for the communication interaction between the two associated modules in the communication system. This is not limited in embodiments of this application. A first wireless communication identifier and a second wireless communication identifier of any module may be the same when a same wireless communication technology is used. Alternatively, a first wireless communication identifier and a second wireless communication identifier of any module may be different when different wireless communication technologies are used.

In addition, any second module serving as a module in the communication system may further exchange other information through the communication connection (including the foregoing wired connection or wireless connection) to the assembly device in a manner similar to that of the first module.

For example, the assembly device may further receive a first wireless communication identifier of the second module from the second module through the communication connection to the second module. The first wireless communication identifier may be used for establishing a wireless connection between another module (for example, the first module associated with the second module) in the communication system and the second module. Alternatively, the assembly device may perform communication configuration by sending information about the second module to the first module, where the information about the second module may include at least a first wireless communication identifier of the second module. In other words, any module in the communication system may perform communication interaction with the assembly device in a manner the same as that of the first module, to notify the assembly device of a first wireless communication identifier of the any module, so that the assembly device performs communication configuration on the module included in the communication. For detailed implementation details, refer to the foregoing related descriptions. Details are not described herein again.

It should be noted that, in the foregoing embodiments of this application, that the assembly device receives the first wireless communication identifier of the first module from the first module, that the assembly device sends the information about the first module to the second module, and that the information about the first module includes the first wireless communication identifier of the first module are merely examples of information exchanged between the assembly device and the first module/second module, but do not constitute limitations. During specific application, content of information exchanged between the assembly device and different modules included in or to be assembled into the communication system is related to an application scenario or a specific communication module. The following provides descriptions with reference to interaction solutions in different scenarios.
(1) In a manufacturing assembly scenario, a first module and a second module indicate modules assembled into the communication system.

Solution a: In an assembly process or after assembly is completed, the assembly device may receive information from the first module through the wired connection or the wireless connection to the first module.

As described above, if communication interaction between the assembly device and the first module is performed through the wired connection, the information received by the assembly device from the first module through the wired connection to the first module may include at least the first wireless communication identifier of the first module. Optionally, the assembly device may further receive, from the first module through the wired connection, at least one piece of the following information: a model of the first module, a number of the first module, a type of the first module, an assembly location of the first module in the communication system, or other information.

If communication interaction between the assembly device and the first module is performed through the wireless connection, the assembly device may identify the identification code of the first module by using an information reading technology. If the identification code directly indicates the first wireless communication identifier of the first module, the assembly device may receive, from the first module through the wireless connection to the first module, at least one piece of the following information: the first wireless communication identifier of the first module, a model of the first module, a number of the first module, a type of the first module, an assembly location of the first module in the communication system, or other information. If the identification code does not directly indicate the first wireless communication identifier, the information received by the assembly device from the first module through the wireless connection to the first module includes at least the first wireless communication identifier of the first module. Optionally, the assembly device may further receive, from the first module through the wired connection, at least one piece of the following information: the first wireless communication identifier of the first module, a model of the first module, a number of the first module, a type of the first module, an assembly location of the first module in the communication system, or other information. For details, refer to the foregoing related descriptions. Details are not described herein again. The explanation is also applicable to an implementation for information exchange between the assembly device and another module in the communication system in the following embodiments. Details are not described below again.

The first wireless communication identifier may be used for establishing a wireless connection between the first module and another module (for example, an association module of the first module) in the communication system. The model, the number, or the type of the first module, the assembly location of the first module in the communication system, or other information may be used by the assembly device to identify the first module, to determine a function or usage of the first module in the communication system.

It should be noted that, in this embodiment of this application, the information received by the assembly device from the first module is different from the information about the first module sent by the assembly device to the second module. The information received by the assembly device from the first module may be actively reported by the first module, or may be requested by the assembly device from the first module. Content and a triggering manner of the information is not limited in embodiments of this application. The information about the first module sent by the assembly device to the second module is used to implement communication configuration of the second module, and the information shall include at least the first wireless communication identifier of the first module associated with the second module, so that a wireless connection is established between the second module and the first module, to help implement wireless communication of the communication system. In an optional implementation, the assembly device may alternatively selectively send, to the second module according to a configuration requirement of the communication system, information that is expected to be injected into the second module and that is used as an example of the information about the first module. For details, refer to the foregoing related descriptions. Details are not described herein again. The explanation is also applicable to an implementation for information exchange between the assembly device and another module in the communication system in the following embodiments. Details are not described below again.

Solution b: It is assumed that the first module included in the communication system is associated with the second module associated with the communication system, the assembly device may selectively send the information about the first module to the second module through the wired connection or the wireless connection to the second module. The information about the first module sent by the assembly device to the second module may include at least the first wireless communication identifier of the first module. Optionally, the information about the first module sent by the assembly device to the second module may further include at least one piece of the following information: A model of the first module, a number of the first module, a type of the first module, an assembly location of the first module in the communication system, partial or all content of the topology information, or other information.

The information about the first module may be used by the second module to implement functions such as identification, communication, positioning, and management for the first module, so that the second module provides functions such as providing a specific service (for example, the specific service may include: reporting specific measurement data or triggering enabling/disabling of a heating or cooling function) for the first module; and implement functions such as storing a correspondence between some or all modules in the communication system and assembly locations thereof (for example, the stored information may be used by the second module to selectively provide corresponding information for the assembly device in the maintenance assembly scenario).

For example, the first wireless communication identifier may be used for establishing the wireless connection between the second module and the first module. Information such as the model, the number, or the type of the first module enables the second module to know a function or usage of the first module in the communication system. The assembly location of the first module in the communication system may be used by the second module to know a location of the first module in the communication system, so that when the first module is faulty in the subsequent maintenance assembly scenario, the location of the faulty module can be reported to the assembly device, or the communication association relationship between the modules included in the communication system can be updated. The part or all content of the topology information stored by the second module may also be reversely provided for the assembly device, to notify the assembly device of a communication association relationship between some or all modules included in the communication system to which the second module belongs.

It should be noted that, during actual application, the first module and the second module are interchangeable, that is, the assembly device may receive information from the second module, and selectively send information about the second module to the first module. For detailed information content, refer to the foregoing content for replacement. Details are not described herein again.

(2) In a maintenance assembly scenario, a to-be-maintained communication system (for example, represented as a first communication system) includes a second module, a third module, and a fourth module. The third module indicates a faulty module or a to-be-replaced module, there is a communication association relationship between the third module and the second module, and the fourth module indicates a non-faulty module. During maintenance assembly, the first module indicates a new module used to replace the third module. After maintenance assembly is completed, a new communication system (for example, represented as a second communication system) includes the first module, the second module, and the fourth module, where there is a communication association relationship between the first module and the second module.

Solution a: The assembly device may determine, in any one of the following manners, the third module that is faulty or to be replaced.

Solution a1: The assembly device determines the third module when detecting modules included in the first communication system.

For example, when the assembly device cannot perform communication interaction with a specific module in the first communication system, the assembly device may determine that the module is a faulty module. Alternatively, the assembly device may detect fault information or to-be-replaced information that is input or configured by an operator, where the fault information or the to-be-replaced information may indicate the third module. A fault detection manner is not limited in embodiments of this application.

Solution a2: The assembly device may receive third indication information from the fourth module through a wired connection or a wireless connection to the fourth module, where the third indication information indicates the third module.

For example, the third indication information may include at least one of the following: fault alarm information of the third module, an assembly location of the third module in the first communication system, a first wireless communication identifier of the third module, and first topology information (indicating a communication association relationship between modules included in the first communication system). The assembly device may determine a location or an identifier of a faulty module and the first topology information of the first communication system based on the third indication information, to update the first topology information when maintaining and assembling the first communication system, to obtain second topology information of the second communication system. The second topology information indicates a communication association relationship between modules included in the second communication system.

In an implementation process of Solution al and Solution a2 in the manufacturing assembly scenario, in an optional implementation, the assembly device may further receive information about the third module from the fourth module, where the information about the third module may include, for example, at least one of the following: a first wireless communication identifier of the third module, a model of the third module, a number of the third module, a type of the third module, an assembly location of the third module in the first communication system, or the like. It should be understood that the third indication information received from the fourth module may be partially the same as the received information of the fourth module, and same information may be transmitted only once. This is not limited in embodiments of this application. In another optional implementation, the assembly device may further receive information about the fourth module from the fourth module, where the information about the fourth module may include, for example, at least one of the following: a first wireless communication identifier of the fourth module, a model of the fourth module, a number of the fourth module, a type of the fourth module, an assembly location of the fourth module in the first communication system, or partial or all content of the stored first topology information.

Solution b: The first module serves as a new module used to replace a faulty module or a to-be-replaced module in the first communication system, and the assembly device may receive, from the first module through the wired connection or the wireless connection to the first module, at least one piece of the following information: a first wireless communication identifier of the first module, a model of the first module, a number of the first module, a type of the first module, an assembly location of the first module in the second communication system, or other information. For details, refer to related descriptions in the manufacturing assembly scenario. Details are not described herein again.

Solution c: In a maintenance assembly process or after maintenance assembly is completed, the assembly device may determine second topology information based on the initial topology configuration information, the information about the first module, and the information about the third module. The second topology information indicates a communication association relationship between modules included in the second communication system. In the maintenance process or after the maintenance is completed, the assembly device may selectively send the information about the first module to the second module through the wired connection or the wireless connection to the second module. The information about the first module may include at least one piece of the following information: the first wireless communication identifier, the model, the number, or the type of the first module, an assembly location of the first module in the second communication system, partial or all content of the second topology information, or other information. Alternatively, the assembly device may selectively send the information about the second module to the first module through the wired connection or the wireless connection to the first module. The information about the second module may include at least one piece of the following information: a first wireless communication identifier, a model, a number, or a type of the second module, an assembly location of the second module in the second communication system, partial or all content of the second topology information, or other information.

It should be understood that, in this embodiment of this application, if the first module is used to replace the third module, the first module needs to have at least all functions that can be implemented by the third module in the communication system. Before the assembly device performs a replacement operation, there is a communication association relationship between the third module and the second module. After the assembly device performs the replacement operation, there is a communication association relationship between the first module replacing the third module and the second module. When performing communication interaction with a non-faulty module in the first communication system, the assembly device may perform communication interaction with one or more non-faulty modules, and the one or more non-faulty modules may preferably be association modules of a faulty module or a to-be-replaced module.

For example, the first communication system may include at least one second module, and any second module in the at least one second module may keep transmitting a heartbeat packet or a service data packet with a third module associated with the any second module. After a specific second module determines that a fault (for example, a communication fault) occurs in the third module associated with the second module, the second module may serve as the fourth module to send the third indication information to the assembly device, to notify the assembly device of the fault in the third module.

It should be understood that, in the first communication system, a non-fault module that is not directly associated with the fault module may also be configured to report alarm information or report module information. This is not limited in embodiments of this application.

(3) In a disassembly and reassembly scenario, a to-be-disassembled communication system (for example, represented as a first communication system) includes a first module, a second module, a third module, and a fourth module, and there is a communication association relationship between the first module and the second module. A to-be-reassembled communication system (for example, represented as a second communication module) may include a first module, a second module, and a fourth module. Some or all of the first module, the second module, and the fourth module are old modules obtained by disassembling the first communication system, and initial topology configuration information of the second communication system indicates that there is a communication association relationship between the first module and the second module.

Solution a: The assembly device may determine a to-be-disassembled module in the first communication system in any one of the following manners.

Solution a1: The assembly device determines the to-be-disassembled module when detecting modules included in the first communication system.

For example, the assembly device may detect disassembly information that is input or configured by an operator, where the disassembly information may indicate the to-be-disassembled module. Alternatively, the assembly device may detect use duration, power consumption, or the like of a module included in the communication system, and then determine, as the to-be-disassembled module, a module whose use duration is greater than or equal to a preset duration threshold or whose power consumption is greater than or equal to a preset power consumption threshold. A disassembly detection manner of the module is not limited in embodiments of this application.

Solution a2: The assembly device may receive fourth indication information from a fifth module through a wired connection or a wireless connection to a specific module (for example, represented as the fifth module) in the first communication system, where the fourth indication information indicates the to-be-disassembled module.

The fourth indication information may be input or configured by an operator in the fifth module, or may be discovered and reported by an association module of the to-be-disassembled module. A triggering manner of the fourth indication information is not limited in embodiments of this application. The to-be-disassembled module may be a module whose performance is reduced, power consumption is increased, or the like (for example, whose performance is less than a preset threshold or whose power consumption is greater than a preset threshold). In this case, the module may be recycled and used in an echelon manner, or may be reassembled and used in another system. Subsequent usage of the disassembled module is not limited in embodiments of this application.

For example, the fourth indication information may include at least one of the following: disassembly alarm information of the to-be-disassembled module, an assembly location of the to-be-disassembled module in the first communication system, a first wireless communication identifier of the to-be-disassembled module, and first topology information (indicating an association relationship between modules included in the first communication system). The assembly device may determine a location or an identifier of the to-be-disassembled module and topology information of the first communication system based on the fourth indication information, to disassemble the to-be-disassembled module in the first communication system.

In an implementation process of the foregoing a1 and a2 in the example, similarly to the maintenance assembly scenario, in an optional implementation, the assembly device may further receive information about the to-be-disassembled module from the fifth module. The information about the to-be-disassembled module may include, for example, at least one of the following: a first wireless communication identifier, a model, a number, or a type of the to-be-disassembled module, an assembly location of the to-be-disassembled module in the first communication system, or the like. It should be understood that the fourth indication information received from the fifth module may be partially the same as the received information of the to-be-disassembled module, and same information may be transmitted only once. This is not limited in embodiments of this application. In another optional implementation, the assembly device may further receive, from the fifth module, information about a module that is not disassembled. The information about the module that is not disassembled may include, for example, at least one of the following: a first wireless communication identifier, a model, a number, or a type of the module that is not disassembled, an assembly location of the module that is not disassembled in the first communication system, or partial or all content of the stored first topology information.

Solution b: Disassemble a to-be-disassembled module in the first communication system in the disassembly and reassembly process. The second communication system is obtained by performing reassembly and configuration based on old modules obtained through disassembly, such as the first module, the second module, and the fourth module. For example, the second communication system includes the first module, the second module, and the fourth module that are obtained by disassembling the first communication system, or another reassembly module. For detailed implementation, refer to related descriptions in the manufacturing assembly scenario. Details are not described herein again.

Solution c: The assembly device determines topology information of the second communication system based on the initial topology configuration information of the second communication system and assembly information of reassembly modules (for example, the first module, the second module, and the fourth module), for example, the topology information is represented as second topology information. The second topology information indicates a communication association relationship between modules included in the second communication system. For detailed implementation, refer to related descriptions in the manufacturing assembly scenario. Details are not described herein again.

Solution d: After determining that there is a communication association relationship between the first module and the second module that are included in the second communication system, the assembly device may selectively send the information about the first module to the second module through the wired connection or the wireless connection to the second module. The information about the first module may include at least one piece of the following information: the first wireless communication identifier, the model, the number, or the type of the first module, the assembly location of the first module in the second communication system, the partial or all content of second topology information, or other information.

It should be understood that, in the first communication system, a non-disassembled module that is not directly associated with a to-be-disassembled module may also be configured to report alarm information or report module information. This is not limited in embodiments of this application.

Therefore, the foregoing describes, with reference to an interaction solution in the manufacturing assembly scenario, the maintenance assembly scenario, or the disassembly and reassembly scenario, content of information exchanged between the assembly device and different modules included in or to be assembled into the communication system, to flexibly implement communication configuration of the modules included in the communication system. This facilitates wireless communication between the modules included in the communication system, and improves assembly automation and communication reliability of the communication system.

It may be understood that, to further improve communication security, in this embodiment of this application, information (for example, the wireless communication identifier of the module or the indication information of the module described above) indicated by the identification code located on the module in the communication system may be an encrypted ciphertext. After reading the identification code of the module by using the information reading technology, the assembly device may further obtain a plaintext by decrypting the information indicated by the identification code in any one of the following manners:
(1) decrypting, by using a locally stored key, the information indicated by the identification code, to obtain the corresponding plaintext;
(2) receiving a key from a server, and decrypt, based on the key, the information indicated by the identification code, to obtain the plaintext; or
(3) sending, to a server, the information indicated by the identification code, and receive, from the server, the plaintext obtained by decrypting the information indicated by the identification code. A manner of decrypting the information indicated by the identification code is not limited in embodiments of this application. Generally, information included in the information about the first module sent by the assembly device to the second module is the plaintext.

Therefore, implementation details of the communication system configuration method in embodiments of this application are separately described with reference to the foregoing embodiments and different scenarios. According to the foregoing method, in a scenario of manufacturing/maintaining/disassembling and reassembling the communication system, the assembly device may exchange the information about the first module between the first module in the communication system and the at least one second module associated with the first module based on the initial topology configuration information of the communication system. In this way, any second module can determine the wireless communication identifier of the first module, so that the second module can establish a wireless connection to the first module based on the wireless communication identifier of the first module, and can avoid establishing an incorrect wireless connection to another module. Therefore, the first module in the communication system may establish the wireless connection to the at least one associated second module, to complete configuration for the communication system and implement wireless communication between different modules. This improves assembly automation and communication reliability of the communication system.

For ease of understanding, the following describes implementation steps of a communication system configuration method in different assembly scenarios by using an example in which the communication system in embodiments of this application is the battery management system (which may also be referred to as a battery pack) shown in FIG. 1. For example, a master board, a slave board, a battery deployed on a slave board, or another execution apparatus deployed on a master board in FIG. 1 is used as a module in a communication system. An identification code on the master board, the slave board, the battery, or the another execution apparatus is indication information indicating a corresponding module, and the indication information indicates, for example, a module identifier.

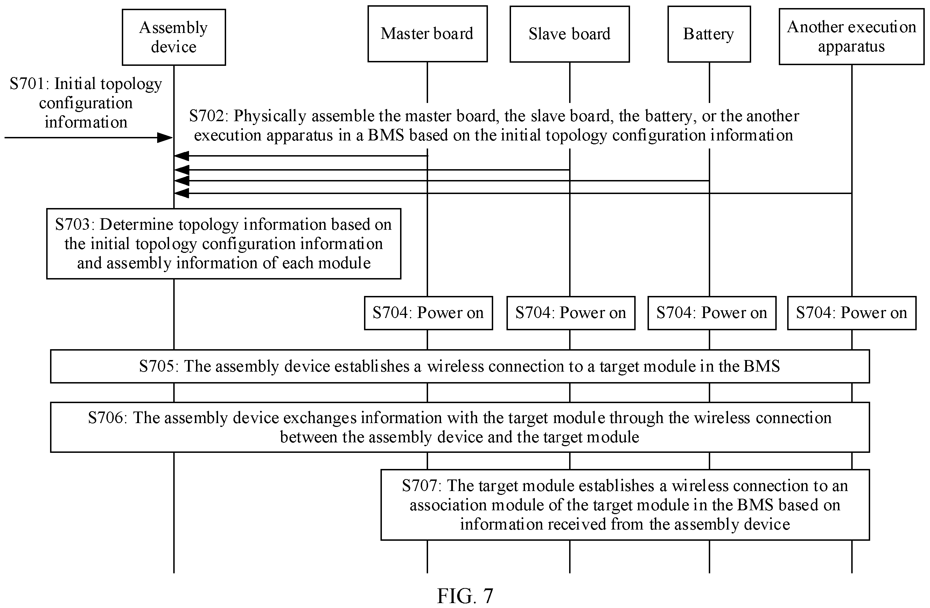

As shown in FIG. 7, in a manufacturing assembly scenario, the configuration method may include the following steps.

S701: An assembly device obtains initial topology configuration information of a BMS to be manufactured and assembled.

For example, the initial topology configuration information may be, for example, framework information that is input or configured by an operator. For another example, the initial topology configuration information may be obtained by the assembly device from a server, a cloud, or another device. For another example, the initial topology configuration information may be prestored in a local memory. A manner of obtaining the initial topology configuration information is not limited in embodiments of this application.

S702: The assembly device physically assembles the master board, the slave board, the battery, or the another execution apparatus in the BMS based on the initial topology configuration information.

In the manufacturing assembly process or after assembly is completed, the assembly device reads indication information on a module like the master board, the slave board, the battery, or the another execution apparatus by using an information reading technology, and obtains assembly information of each module.

After physical assembly is completed, indication information on one or more modules may be blocked. Therefore, the assembly device may read the indication information of the modules in a process of assembling these modules. When the indication information of each module is an encrypted ciphertext, the assembly device may further decrypt the read indication information of each module in any one of the foregoing decryption manners to obtain a corresponding plaintext, and use the plaintext as equivalent information of the encrypted ciphertext to perform a subsequent information configuration process. For a detailed decryption process, refer to the foregoing related descriptions. Details are not described herein again.

The assembly information of each module may include at least one of the following: a sequence in which the module is identified by the assembly device, a location in which the module is identified by the assembly device, and an assembly location or an assembly sequence in which the module is assembled into the communication system. The sequence or the location in which the module is identified by the assembly device is related to a reading sequence or location of a reading module of the assembly device. The assembly sequence includes an actual assembly sequence of the module. The assembly location includes an actual assembly location of the module. When the assembly device includes a plurality of reading modules, the assembly information of the module may further include an identifier actually used to identify the reading module that is in the assembly device and that is used by the module. It may be understood that, in S702, reading and identification of the indication information on the module is merely used as an example, and content included in the configuration information is described but is not limited. During actual application, the assembly device may further obtain other configuration information of the modules when physically assembling the modules in the communication system. Details are not described herein again.

S703: After manufacturing assembly is completed, the assembly device determines topology information based on the initial topology configuration information and the assembly information of each module, where the topology information indicates a communication association relationship between modules included in the BMS, for example, a communication association relationship between the master board and the slave board, a communication association relationship between the battery deployed on the slave board and the slave board, or an association relationship between the another execution apparatus deployed on the master board and the master board.

S704: Enable a communication function of each module in the BMS After the BMS is physically assembled.

S705: When the communication function of each module in the BMS is in an enabled state, the assembly device establishes a wireless connection to a target module in the BMS.

The target module may include any module in the BMS, for example, any one of the master board, the slave board, the battery, or the another execution apparatus. Alternatively, the target module may include a specific module in the BMS, for example, the master board or the slave board.

For example, the target module is the master board. The assembly device may send a message (for example, a connection request message) including indication information indicating a plaintext of the master board, where the message is used to request to establish a wireless connection to the master board. After receiving the message, the master board establishes the wireless connection to the assembly device that sends the message. For example, the master board sends an answer message (for example, a connection response message) to the assembly device, to indicate that the wireless connection is successfully established.

It should be understood that communication interaction between the assembly device and each module in the BMS may alternatively be performed through a wired connection. For detailed implementation details, refer to the foregoing related descriptions. Details are not described herein again. In FIG. 7, that the assembly device establishes the wireless connection to the master board, the slave board, the battery, or the another execution apparatus is merely an example but is not limited. In another embodiment, the assembly device may perform communication interaction with some or all modules in the BMS, and a communication interaction mode is not limited to a wired connection or a wireless connection.

S706: The assembly device exchanges information with the target module through the wireless connection between the assembly device and the target module, to complete communication configuration for the BMS obtained during manufacturing assembly.

For example, the target module includes the master board. The assembly device may receive, from the master board, at least one piece of the following information: a first wireless communication identifier, a model, a number, or a type of the master board, or an assembly location of the master board in the BMS. Further, the assembly device may make a configuration decision on the communication system based on the information received from the master board, to more accurately determine a communication association relationship between modules included in the communication system.

For example, the target module includes the slave board. The assembly device may send information about the master board to the slave board, for example, a first wireless communication identifier of the master board. Optionally, the sent information about the master board may further include at least one piece of the following information: a model, a serial number, or a type of the master board, an assembly location of the master board in the BMS, or partial or all content of topology information of the BMS. In addition, another module in the BMS exchanges information with the assembly device according to a same method.

S707: The target module establishes a wireless connection to an association module of the target module in the BMS based on the information received from the assembly device. Optionally, the target module may further store the information received from the assembly device.

For example, the target module includes the master board. The association module of the master board includes the slave board. In S706, an example in which information about the slave board received by the master board from the assembly device includes at least a first wireless communication identifier of the slave board. In S707, the master board may establish a wireless connection to the slave board based on the first wireless communication identifier of the slave board. After a wireless connection is established between the modules in the BMS according to a requirement, the BMS may operate normally and implement a corresponding service.

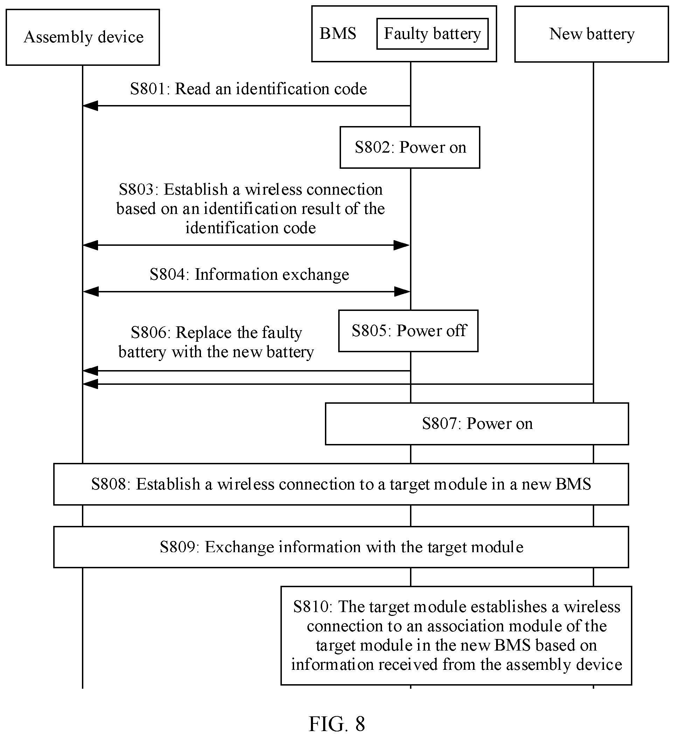

When the master board, the slave board, the battery, or the another execution apparatus serves as the target module, the stored information received from the assembly device may be further used in a scenario like performing maintenance assembly/disassembly and reassembly on a module in the BMS. The following provides descriptions with reference to a method flowchart in FIG. 8.

As shown in FIG. 8, for a BMS that is to be maintained or to be disassembled and reassembled, in a maintenance assembly scenario, a battery 2 may serve as a new module to replace a battery 1 in the BMS, and a new BMS is obtained after replacement. In a disassembly and reassembly scenario, a configuration method may be implemented based on a specific reassembly situation. For the configuration method, refer to that in the manufacturing assembly scenario shown in FIG. 7 or that in a maintenance assembly process shown in FIG. 8 below. Details are not described again in embodiments of this application. Specifically, a configuration method in the maintenance assembly scenario may include the following steps.

S801: An assembly device reads an identification code of a to-be-maintained BMS by using an information reading technology.

The identification code of the BMS may be an identification code located in the BMS. Alternatively, the identification code of the BMS may include an identification code of each module in the BMS or an identification code of a specific module. An implementation of the identification code of the BMS is not limited in embodiments of this application.

S802: Enable a communication function of the BMS.

S803: When the BMS is in an on state, the assembly device may establish a wireless connection to the BMS based on an identification result of the identification code of a first battery pack BMS.

The identification code of the first battery pack may be specifically implemented as indication information. In S7803, the assembly device may send a message (for example, a connection request message) including the indication information of the BMS, where the message is used to request to establish the wireless connection to the BMS. After receiving the message, the BMS establishes the wireless connection to the assembly device that sends the message. For example, the BMS sends an answer message (for example, a connection response message) to the assembly device, to indicate that the wireless connection is successfully established.

S804: The assembly device exchanges information with the first battery pack BMS through the wireless connection between the assembly device and the first battery pack BMS.

For example, in the maintenance assembly scenario, if a battery in the BMS is faulty, the assembly device may receive indication information from a non-faulty master board in the BMS, the slave board on which the battery is deployed, or the like, where the indication information indicates the faulty battery. Optionally, the assembly device may further receive information about a faulty module from a non-faulty module in the BMS, for example, a first wireless communication identifier, a model, a number, or a type of the faulty battery, or an assembly location of the faulty battery in the BMS. Optionally, the assembly device may further receive topology information of the BMS, information about the non-faulty module, or the like from the non-faulty module. Details are not described herein again.

S805: The assembly device disables the communication function of the BMS.

S806: The assembly device performs maintenance assembly on the BMS, and replaces the faulty battery in the BMS with a new battery.

In a replacement process, the assembly device may read an identification code of a module A by using an information reading technology.

S807: Enable a communication function of a new BMS including the new battery.

S808: The assembly device establishes a wireless connection to a target module in the new BMS.

For example, the target module may be the new battery in the new BMS. Alternatively, the target module may be the non-faulty module in the original BMS, for example, the master board or the slave board on which the new battery is deployed.

When the wireless connection is established, similarly to the step shown in FIG. 7, for example, the assembly device may send a message (for example, a connection request message or a broadcast message) including indication information of the new battery/master board/slave board, where the message is used to request to establish a wireless connection to the new battery/master board/slave board. After receiving the message, the new battery/master board/slave board establishes the wireless connection to the assembly device that sends the message. For example, the new battery/master board/slave board may send an answer message (for example, a connection response message) to the assembly device, to indicate that the wireless connection is successfully established.

S809: The assembly device performs communication interaction with the new battery/master board/slave board through a communication connection between the assembly device and the new battery/master board/slave board.

For example, the target module is the new battery. In S809, the assembly device may send, to the new battery, information about the slave board on which the new battery is deployed, including but not limited to: a first wireless communication identifier, a model, a number, or a type of the slave board, an assembly location of the slave board in the new BMS, partial or all content of topology information of the new BMS, or the like. Alternatively, in S809, the assembly device may send information about the new battery to the slave board on which the new battery is deployed, including but not limited to: a first wireless communication identifier, a model, a number, or a type of the new battery, an assembly location of the new battery in the new BMS, partial or all content of topology information of the new BMS, or the like.

S810: The target module establishes a wireless connection to an association module of the target module in the new BMS based on the information received from the assembly device. Optionally, the target module may further store the information received from the assembly device.

For example, the target module is the slave board on which the new battery is deployed. In S810, the slave board may establish a wireless connection to the new battery based on the first wireless communication identifier of the new battery received from the assembly device. After a wireless connection is established between modules in the new BMS according to a requirement, the BMS may operate normally and implement a corresponding service.

In conclusion, with reference to the method flowcharts shown in FIG. 7 and FIG. 8, the communication system configuration method in embodiments of this application is described with reference to the BMS. According to the method, in the scenario of manufacturing/maintaining/disassembling and reassembling the communication system, an identification code of a module in the communication system is obtained by using an information reading technology, and a communication connection to the module is established based on the identification code, to exchange information about a related module between the assembly device and the module included in the communication system. In this way, a correct wireless connection can be automatically established between modules included in the communication system based on the information received from the assembly device, to implement a corresponding service of the communication system. According to the method, wireless communication between the modules in the communication system can be stably and reliably implemented, and a requirement for information security is met. In addition, manual intervention can be reduced as much as possible, and automation of the manufacturing/maintenance/disassembly and reassembly process can be improved.

An embodiment of this application further provides a communication apparatus. The communication apparatus may be implemented as the assembly device or any module in the communication system in the foregoing embodiments, and is configured to implement corresponding methods in the foregoing method embodiments. For related features, refer to the foregoing method embodiments. Details are not described herein again.

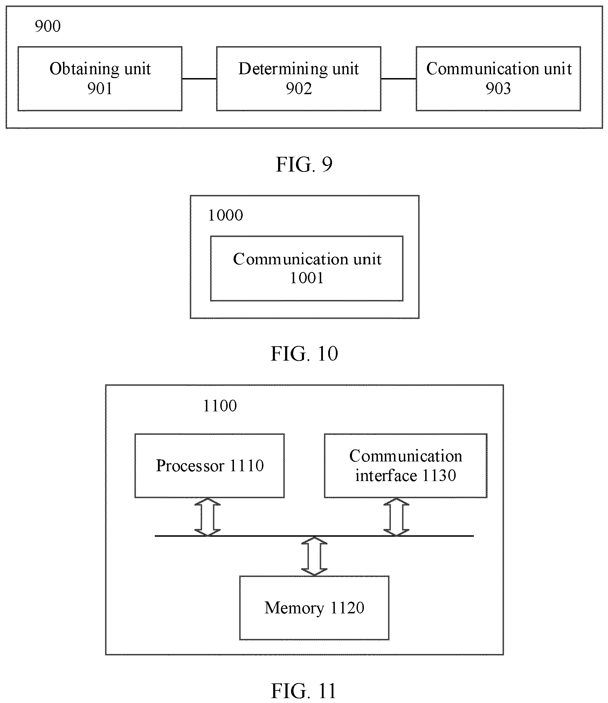

In an example, as shown in FIG. 9, the communication apparatus 900 may be implemented as the assembly device. The communication apparatus 900 may include: an obtaining unit 901, configured to obtain a wireless communication identifier of a first module; a determining unit 902, configured to determine, based on initial topology configuration information of a communication system, at least one second module associated with the first module; and a communication unit 903, configured to send information about the first module to the at least one second module, where the information about the first module is used for establishing a communication connection between the first module and the at least one second module, and the information about the first module includes the wireless communication identifier of the first module. For detailed implementation details, refer to the foregoing related method embodiments. Details are not described herein again.

In another example, as shown in FIG. 10, the communication apparatus 1000 may be implemented as any module in the communication system. The communication apparatus 1000 may include a communication unit 1001, configured to: receive information about a first module from an assembly device, where the information about the first module includes a wireless communication identifier of the first module; and establish a communication connection to the first module based on the information about the first module. For detailed implementation details, refer to the foregoing related method embodiments. Details are not described herein again.

It should be noted that, in embodiments of this application, division into the units is an example, and is merely logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to some solutions, or all or some of the technical solutions may be implemented in a form of a software product. The computer software product is stored in a storage medium, and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

In a simple embodiment, a person skilled in the art may figure out that the communication apparatus in the foregoing embodiments may be in a form shown in FIG. 11.

An apparatus 1100 shown in FIG. 11 includes at least one processor 1110 and a memory 1120, and optionally, may further include a communication interface 1130.

A specific connection medium between the processor 1110 and the memory 1120 is not limited in embodiments of this application.

In the apparatus shown in FIG. 11, when communicating with another device, the processor 1110 may perform data transmission through the communication interface 1130.

When the communication apparatus is in the form shown in FIG. 11, the processor 1110 in FIG. 11 may invoke computer-executable instructions stored in the memory 1120, so that the device 1100 performs the method performed by the communication apparatus in any one of the foregoing method embodiments.

An embodiment of this application further relates to a chip system. The chip system includes a processor, configured to invoke a computer program or computer instructions that is/are stored in a memory, so that the processor performs the method in any one of the foregoing method embodiments.

In a possible implementation, the processor is coupled to the memory through an interface.

In a possible implementation, the chip system further includes the memory. The memory stores the computer program or the computer instructions.

An embodiment of this application further relates to a computer-readable storage medium. The computer-readable storage medium stores program code. When the program code is run on a computer, the computer is enabled to perform the method in any one of the foregoing method embodiments.

An embodiment of this application further relates to a computer program product. When the computer program product runs on a computer, the computer is enabled to perform the method in any one of the foregoing method embodiments.

An embodiment of this application further relates to a processor. The processor is configured to invoke a computer program or computer instructions that is/are stored in a memory, so that the processor performs the method in any one of the foregoing method embodiments.

The processor mentioned in any of the foregoing descriptions may be a general-purpose central processing unit, a microprocessor, an application-specific integrated circuit (application-specific integrated circuit, ASIC), or one or more of integrated circuits configured to control program execution of the method in any one of the foregoing method embodiments. The memory mentioned in any of the foregoing descriptions may be a read-only memory (read-only memory, ROM), another type of static storage device that can store static information and instructions, a random access memory (random access memory, RAM), or the like.

It should be understood that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

## Claims

1. A communication system configuration method, wherein the method comprises:
obtaining a wireless communication identifier of a first module;
determining, based on initial topology configuration information of a communication system, at least one second module associated with the first module; and
sending information about the first module to the at least one second module, wherein the information about the first module is used for establishing a communication connection between the first module and the at least one second module, and the information about the first module comprises the wireless communication identifier of the first module.

2. The method according to claim 1, wherein the obtaining a wireless communication identifier of a first module comprises:
obtaining the wireless communication identifier of the first module by using an information reading technology, wherein the information reading technology comprises any one of the following: an image capture technology, an optical scanning technology, a radio frequency reading technology, or a magnetic label reading technology.

3. The method according to claim 1, wherein the obtaining a wireless communication identifier of a first module comprises:
receiving the wireless communication identifier from the first module through a wired connection to the first module.

4. The method according to claim 1, wherein the obtaining a wireless communication identifier of a first module comprises:
receiving the wireless communication identifier from the first module through a wireless connection to the first module.

5. The method according to claim 4, wherein the method further comprises:
obtaining first indication information by using an information reading technology, wherein the first indication information indicates the first module, and the information reading technology comprises any one of the following: an image capture technology, an optical scanning technology, a radio frequency reading technology, or a magnetic label reading technology; and
establishing the wireless connection to the first module based on the first indication information.

6. The method according to claim 5, wherein the establishing the wireless connection to the first module based on the first indication information comprises:
sending a first message to the first module, wherein the first message comprises the first indication information, and the first message is used to request to establish the wireless connection; or
receiving a second message from the first module, wherein the second message comprises the first indication information, and the second message is used to request to establish the wireless connection.

7. The method according to any one of claims 1 to 6, wherein the sending information about the first module to the at least one second module comprises:
sending the information about the first module to the at least one second module through a wired connection to the at least one second module.

8. The method according to any one of claims 1 to 6, wherein the sending information about the first module to the at least one second module comprises:
sending the information about the first module to the at least one second module through a wireless connection to the at least one second module.

9. The method according to claim 8, wherein the method further comprises:
obtaining second indication information of the at least one second module by using the information reading technology, wherein second indication information of each second module indicates the second module, and the information reading technology comprises any one of the following: the image capture technology, the optical scanning technology, the radio frequency reading technology, or the magnetic label reading technology; and
establishing the wireless connection to the at least one second module based on the second indication information.

10. The method according to any one of claims 1 to 9, wherein the information about the first module further comprises at least one of the following: a model of the first module, a number of the first module, a type of the first module, or an assembly location of the first module in the communication system.

11. The method according to any one of claims 1 to 10, wherein the initial topology configuration information indicates a communication topology structure between modules comprised in the communication system and/or a communication topology structure between locations of unknown modules to be assembled into the communication system, and the method further comprises:
determining topology information based on the initial topology configuration information and assembly information of at least one module in a process of assembling the communication system, wherein the assembly information of the module comprises at least one of the following: a sequence in which the module is identified by an assembly device, a location in which the module is identified by the assembly device, and an assembly location or an assembly sequence in which the module is assembled into the communication system, the topology information comprises a communication association relationship between the modules comprised in the communication system, and the information about the first module further comprises partial or all content of the topology information.

12. The method according to claim 11, wherein the first module is configured to replace a third module in the communication system, the third module is a faulty module or a to-be-replaced module, and the method further comprises:
updating the topology information based on the initial topology configuration information of the communication system, the information about the first module, and information about the third module.

13. The method according to claim 12, wherein the method further comprises:
determining the third module in any one of the following manners:
determining the third module when detecting the modules comprised in the communication system; or
receiving third indication information from a fourth module, wherein the third indication information indicates the third module, and the fourth module comprises a non-faulty module in the communication system.

14. The method according to claim 13, wherein the method further comprises:
receiving the information about the third module from the fourth module.

15. The method according to any one of claims 1 to 14, wherein the communication system comprises a battery management system BMS.

16. The method according to claim 1 or 2, wherein the wireless communication identifier of the first module is an encrypted ciphertext, and the obtaining a wireless communication identifier of a first module further comprises:
obtaining a plaintext by decrypting the wireless communication identifier of the first module in any one of the following manners:
decrypting the wireless communication identifier of the first module by using a locally stored key, to obtain the plaintext;
receiving a key from a server, and decrypting the wireless communication identifier of the first module based on the key, to obtain the plaintext; or
sending the wireless communication identifier of the first module to a server, and receiving, from the server, the plaintext obtained by decrypting the wireless communication identifier of the first module.

17. A communication system configuration method, applied to a second module, wherein the method comprises:
receiving information about a first module from an assembly device, wherein the information about the first module comprises a wireless communication identifier of the first module; and
establishing a communication connection to the first module based on the information about the first module.

18. The method according to claim 17, wherein the receiving information about a first module from an assembly device comprises:
receiving the information about the first module from the assembly device through a wired connection to the assembly device.

19. The method according to claim 17, wherein the receiving information about a first module from an assembly device comprises:
receiving the information about the first module from the assembly device through a wireless connection to the assembly device.

20. The method according to claim 19, wherein the method further comprises:
establishing the wireless connection to the assembly device in response to a first message from the assembly device, wherein the first message comprises second indication information, and the second indication information indicates the second module; or
sending a second message to the assembly device, wherein the second message comprises second indication information, and the second message is used to request to establish the wireless connection.

21. The method according to claim 20, wherein the second indication information is located on the second module, and the second indication information is identified in any one of the following manners: an image capture technology, an optical scanning technology, a radio frequency reading technology, or a magnetic label reading technology.

22. The method according to any one of claims 17 to 21, wherein the information about the first module further comprises at least one of the following: a model of the first module, a number of the first module, a type of the first module, or an assembly location of the first module in a communication system.

23. The method according to any one of claims 17 to 22, wherein the information about the first module further comprises partial or all content of topology information, the topology information indicates a communication association relationship between modules comprised in the communication system, the topology information is obtained based on initial topology configuration information of the communication system and assembly information of at least one module in a process of assembling the communication system, the initial topology configuration information indicates a communication topology structure between the modules comprised in the communication system and/or a communication topology structure between locations of unknown modules to be assembled into the communication system, and the assembly information of the module comprises at least one of the following: a sequence in which the module is identified by the assembly device, a location in which the module is identified by the assembly device, and an assembly location or an assembly sequence in which the module is assembled into the communication system.

24. The method according to claim 23, wherein the first module is configured to replace a third module in the communication system, the third module is a faulty module or a to-be-replaced module, and the topology information is updated based on the initial topology configuration information of the communication system, the information about the first module, and information about the third module.

25. The method according to claim 24, wherein the second module is a non-faulty module, and the method further comprises:
sending third indication information to the assembly device, wherein the third indication information indicates the third module.

26. The method according to claim 25, wherein the method further comprises:
sending the information about the third module to the assembly device.

27. The method according to any one of claims 17 to 26, wherein the communication system comprises a battery management system BMS.

28. A communication system configuration apparatus, comprising:
an obtaining unit, configured to obtain a wireless communication identifier of a first module;
a determining unit, configured to determine, based on initial topology configuration information of a communication system, at least one second module associated with the first module; and
a communication unit, configured to send information about the first module to the at least one second module, wherein the information about the first module is used for establishing a communication connection between the first module and the at least one second module, and the information about the first module comprises the wireless communication identifier of the first module.

29. A communication system configuration apparatus, comprising:
a communication unit, configured to: receive information about a first module from an assembly device, wherein the information about the first module comprises a wireless communication identifier of the first module; and establish a communication connection to the first module based on the information about the first module.

30. A communication system configuration apparatus, comprising at least one processor and an interface circuit, wherein the interface circuit is configured to provide data or code instructions for the at least one processor, and the at least one processor is configured to implement the method according to any one of claims 1 to 16 or implement the method according to any one of claims 17 to 27 by using a logic circuit or executing the code instructions.

31. A communication system, comprising at least two modules, wherein any one of the at least two modules is configured to perform the method according to any one of claims 17 to 27.

32. A computer-readable storage medium, wherein the computer-readable storage medium stores a computer program, and when the computer program is run, the method according to any one of claims 1 to 16 is performed, or the method according to any one of claims 17 to 27 is performed.
